(19) Europäisches Patentamt
European Patent Office
Office européen des brevets

(11) **EP 2 976 830 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(51) Int Cl.:
*H02K 99/00* *(2014.01)*    *H02N 11/00* *(2006.01)*

(21) Anmeldenummer: **14727154.8**

(22) Anmeldetag: **20.03.2014**

(86) Internationale Anmeldenummer:
**PCT/DE2014/100095**

(87) Internationale Veröffentlichungsnummer:
**WO 2014/146647 (25.09.2014 Gazette 2014/39)**

(54) **MAGNETISCHES SCHALTELEMENT IN EINEM DEFINIERT ANGEORDNETEN MAGNETKREIS INKLUSIVE INDUKTORSPULE SOWIE VERFAHREN ZUR BEREITSTELLUNG ELEKTRISCHER ENERGIE**

MAGNETIC SWITCHING ELEMENT IN A MAGNETIC CIRCUIT ARRANGED IN A DEFINED MANNER INCLUDING INDUCTOR COIL AND METHOD FOR PROVIDING ELECTRICAL ENERGY

ÉLÉMENT DE COMMUTATION MAGNÉTIQUE DANS UN CIRCUIT MAGNÉTIQUE DISPOSÉ DE MANIÈRE DÉFINIE, BOBINE D'INDUCTEUR COMPRISE, AINSI QUE PROCÉDÉ DE FOURNITURE D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2013 DE 102013102830**

(43) Veröffentlichungstag der Anmeldung:
**27.01.2016 Patentblatt 2016/04**

(73) Patentinhaber: **FRAUNHOFER-GESELLSCHAFT zur Förderung der angewandten Forschung e.V. 80636 Munich (DE)**

(72) Erfinder:
- **LAUSCH, Holger**
  **07743 Jena (DE)**
- **BRAND, Michael**
  **07743 Jena (DE)**
- **ARNOLD, Michael**
  **07743 Jena (DE)**

(74) Vertreter: **Oehmke, Volker et al Patentanwälte Oehmke & Kollegen Neugasse 13 07743 Jena (DE)**

(56) Entgegenhaltungen:
**EP-A1- 0 308 611**

**Beschreibung**

Die Erfindung betrifft ein magnetisch wirksames Schaltelement zur gezielten Veränderung der resultierenden effektiven Permeabilität in definierten Bereichen von Magnetkreisen und magnetische wirksamen Anordnungen zur topischen Bereitstellung von Energie.

In den letzten Jahren hat die Medizintechnik immer mehr elektronisch gesteuerte, funktionale technische Einheiten miniaturisiert und integriert. Dies erstreckt sich von mikrofluidischen Transportsystemen wie Mikropumpen, Schrittmachersystemen bis hin zu mechanischen, elektrisch und magnetisch das Zellwachstum stimulierende Systeme. Ähnliche Anforderungen gelten auch im Bereich der online/inside energieautark arbeitenden mikronanointegrierten Prozessmesstechnik (Bio- und Umwelttechnik, Pharmazeutik, Chemie und keramische Industrie).

Diesen Systemen ist gemeinsam, dass kabellos über längere Zeit Energie zu deren Betrieb verfügbar sein muss. In herkömmlicher Weise wird die Energie durch integrierte Akkus zur Verfügung gestellt. Diese Akkus müssen von Zeit zu Zeit geladen werden. Die Umgebungsbedingungen in situ können aber signifikant deren Energieeffizienz und damit die Lade- bzw. Austauschzyklen beeinflussen. Im medizinischen Bereich hat dies einerseits den Nachteil einer zeitweiligen Ruhephase des Patienten. Zum anderen können tief in den Körper oder in den Knochen, z. B. zur Elektrostimulation, integrierte elektronische System und Akkus nur mit hohen Energiedichten und hohen Verlusten über das herkömmliche induktive Verfahren mit Energie versorgt werden. In der Prozessmesstechnik besteht der Nachteil in den Stand-/ Ausfallzeiten sowie teilweise Nichterreichbarkeit der Sensoren und Aktoren.

In der letzten Zeit sind aber die o. g. Sensor-/Aktor-Systeme derart weiterentwickelt worden, dass diese weiter miniaturisiert wurden, sehr leistungsfähig geworden sind, hohe Wirkungsgrade besitzen und mit geringen Energiedichten auskommen. In einigen Fällen werden Energiedichten von nur wenigen mW / cm2 benötigt. Aus diesen Gründen sucht der Markt derzeit nach effizienten Energieübertragungs- und / oder Harvestingsystsemen, welche die dafür kleinen benötigten Energiemengen ohne hohe Verlusten von außen auf die integrierten Systeme überträgt. Die derzeit verfügbaren oder in Entwicklung befindlichen Harvester benötigen Temperaturgradienten oder mechanische Vibrationen am Ort des Sensors, die in der Regel dann aber auch das Messergebnis bzw. die Messverfahren erheblich beeinflussen. Die herkömmlichen induktiven Ladesysteme haben den Nachteil einer starken Abstandsabhängigkeit der Effizienz sowie der Erzeugung von erheblichen Störfeldern.

In anderen Fällen sucht die Industrie nach energieautarken Sensorsystemen, welche in der Anlagentechnik zum Einsatz kommen. Bei aktiven Sensoren stellen sich die gleichen Probleme wie im oben genannten Fall in der Medizintechnik. Es sollen Stillstandzeiten von Anlagen vermieden werden selbst wenn diese nur kurz sind. Systeme, welche drahtlos Energie auf Akkus, welche letztendlich den Sensor mit Energie versorgen, übertragen, könnten eine dauerhafte und effektive Lösung dieser Probleme darstellen. Auch hierbei haben herkömmliche induktive Ladesysteme die oben genannten Nachteile hinsichtlich Effizienz und Erzeugung von Störfeldern.

Aus der DE 37 32 312 A1 ist eine Schaltung bekannt, die aus zwei Magnetkreisen besteht. In einem der Magnetkreise ist eine Steuerspule vorhanden, in dem anderen Magnetkreis ist ein Permanentmagnet angeordnet. Zwischen den Magnetkreisen ist ein Jochblechkern mit einer Spule angeordnet, der von den Magnetkreisen jeweils durch einen Luftspalt getrennt ist. Der Luftspalt ist mit einem metamagnetischen Material ausgefüllt. Durch den Permanentmagneten wird eine statische magnetische Flussdichte geliefert, die so eingestellt ist, dass ein Wert der Flussdichte knapp unterhalb eines Wertes liegt, durch den eine Schwellfeldstärke in dem metamagnetischen Material bewirkt würde. Das metamagnetische Material wirkt in diesem Zustand noch antiferromagnetisch. Wird durch die Steuerspule ein weiteres Magnetfeld angelegt, wird die magnetische Flussdichte erhöht, wodurch das metamagnetische Material nun ferromagnetische Eigenschaften aufweist. Die Magnetkreise und der Jochblechkern mit Spule sind verbunden und es kommt zu einem steilen Anstieg der Magnetisierung des Jochblechkerns. Dabei wird in der Spule eine Spannung induziert, die als elektrische Energie abgeleitet und genutzt werden kann. Durch eine geringfügige Änderung der Flussdichten ist eine hohe Änderung der magnetischen Flussdichten steuerbar. Die in den Spalten vorhandenen Schichten des metamagnetischen Materials dienen als magnetokalorische Schalter, während die gesamte Anordnung als magnetokalorischer Induktor (fortan auch: magnetischer Arbeitskreis) betrieben werden kann.

In der Schrift DE 38 00 098 A1 ist ein magnetokalorischer Induktor mit Kompensationskern zur Erzeugung elektrischer Energie dargestellt, der eine angepasste Magnetkreisanordnung mit permanentmagnetischem Fluss in Anlehnung an das Transistorprinzip in Gleichstromkreisen vorschlägt. Der Luftspalt des permanentmagnetischen Jochkreises wird dabei ebenfalls mit metamagnetischem Material ausgefüllt. Zusätzlich werden Kompensationskerne zur Eliminierung eines antiferromagnetischen Streuflusses angeordnet. Als metamagnetisches Material werden gleichgerichtet-kristallorientierte und somit anisotrope metamagnetische Werkstoffe mit Einkristalleigenschaften vorgeschlagen. Dieses magnetische Flip-Flopsystem bedarf einer externen elektrischen Energiezufuhr zumindest für die Gegenfeldgenerierung und die Flussunterbrechung.

In der DE 10 2007 052 784 A1 wird ein thermomagnetischer Generator zur Versorgung eines elektrischen Verbrauchers vorgestellt, der mittels thermischer Anregung eines in einem Magnetfeld angeordneten Kernelementes eine zyklische Änderung einer magnetische Flussdichte bewirkt, wobei durch die Magnetflussdichteänderung in einer Spule elektrische Energie bereitgestellt werden kann. Benötigt wird ein Kernelement aus einem metamagnetischen Material, welches temperaturabhängig alternierend in das Magnetfeld gebracht wird. Als Kernmaterial werden Lanthanoide, wie Gadolinium, Dysprosium, Holmium, Erbium und Terbium sowie in Fluiden gelöste Lanthanoidpartikel vorgeschlagen. Der magnetische Gesamtzustand dieser Materialien hat ferromagnetische und antiferromagnetische Anteile. Die Arbeitstemperatur ist so festgelegt, dass das temperaturabhängige Entropiemaximum zwischen zwei alternierenden Arbeitstemperaturen liegt. Als vorteilhaft wird angeführt, dass die Spulenlängsachse weitestgehend parallel zum Magnetfeld bzw. die Spule oder Spulenlängsachse parallel zum Feldlinienverlauf der sie durchsetzenden Feldlinien ausgerichtet sind. Hier wird im Unterschied zu den anderen vorgestellten Verfahren extern keine elektrische Energie zugeführt. Allerdings wird gezielt ein thermischer Gradient in Gestalt eines gekoppelten thermischen Medienkreislaufs oder eines Wärmeaustauschs zwingend benötigt und muss eingebracht werden. Eine Verschiebbarkeit des Kernelements dient dabei vorrangig der Anpassung an thermisch unterschiedliche Fluid- bzw. Medium-Ströme bzw. Bereiche.

Nachteilig an allen vorgenannten Lösungen ist, dass bei der Verwendung von magnetokalorischen Materialien ein eingeschränkter Temperaturbereich vorgegeben ist und bei antiferromagnetischen Materialien die Schwellfeldstärke für den feldabhängigen Übergang in die ferromagnetische Phase (Schaltschwelle) bei sehr hohen Feldstärken liegt (> 2 T).

In der Schrift EP 0 308 611 A1 ist ein magnetischer Arbeitskreis mit einem Magnetkreis und eine innerhalb des Magnetkreises angeordnete Vorrichtung zur Erzeugung eines auf einen Permeabilitätsbereich des Magnetkreises einwirkenden veränderlichen Magnetfelds zur gezielten Veränderung einer resultierenden effektiven magnetischen Permeabilität in einem Permeabilitätsbereich des Magnetkreises und zur Bereitstellung von Energie beschrieben. Der Magnetkreis weist einen permanentmagnetischen Bereich mit einem permanentmagnetischen Material auf, durch das ein Magnetfeld in dem Magnetkreis bereitgestellt ist. Der Magnetkreis weist auch den permeabilitätsbereich auf, wobei in dem Permeabilitätsbereich ein magnetisches Schaltelement vorhanden ist und in dem magnetischen Schaltelement mindestens ein Material vorhanden ist, dessen magnetische Permeabilität durch Wirkung des veränderlichen Magnetfelds veränderbar ist. Zudem weist der Magnetkreis mindestens einen Induktionsbereich auf, in dem durch Wirkung einer Änderung der resultierenden effektiven Permeabilität im Permeabilitätsbereich des Magnetkreises und der bereitgestellten Energie eine magnetische Flussänderung auftritt.

Gefordert wird also eine draht- und kontaktlose Energieversorgung für mikro- / nanoskalige Mono- / Multisensor- / Aktorsysteme insbesondere für die Prozessmesstechnik sowie für medizintechnische, diagnostische Systeme, die

- am Ort des elektrischen Verbrauchers in Gestalt von Sensoren / Aktoren Querempfindlichkeiten vermeiden, indem keine störenden elektrischen Felder emittiert werden,
- am Ort des elektrischen Verbrauchers in Gestalt von Sensoren / Aktoren ohne bewegte Massekomponenten auskommt (Ortsunveränderlichkeit),
- am Ort des elektrischen Verbrauchers in Gestalt von Sensoren / Aktoren einen Betrieb im justierten Zustand garantiert,
- am Ort des elektrischen Verbrauchers in Gestalt von Sensoren / Aktoren als Energy-Harvester funktioniert und
- am Ort des elektrischen Verbrauchers in Gestalt von Sensoren / Aktoren draht- und kontaktlos sowie räumlich disloziert einen definiert erzeugten oder vorhandenen Gradienten abgreift und energetisch nutzbar macht.

Gemeinhin sind Temperatur, Feuchte, Luftdruck, elektrisches Feld und / oder magnetisches Feld als die wichtigsten physikalischen Querempfindlichkeiten bekannt, da sie die Leitfähigkeiten der Sensorkomponenten beeinflussen.

Der Erfindung liegt die Aufgabe zugrunde, ein magnetisch wirksames Schaltelement zur gezielten Veränderung der resultierenden effektiven Permeabilität in definierten

Bereichen von Magnetkreisen und magnetische wirksamen Anordnungen zur topischen Bereitstellung von Energie vorzuschlagen.. Der Erfindung liegt außerdem die Aufgabe zugrunde, eine verbesserte Möglichkeit der Bereitstellung elektrischer Energie ohne Querempfindlichkeitsmomente vorzuschlagen.

Die Aufgaben werden durch die Gegenstände der unabhängigen Ansprüche gelöst. Vorteilhafte Ausgestaltungen sind in den abhängigen Ansprüchen angegeben.

Die Erfindung schlägt zu diesem Zweck ein magnetisch wirksames Schaltelement vor, welches einen magnetischen Wechsel- / Drehfeld-Gradient energetisch nutzbar macht. Extern erzeugte magnetische Wechsel- / Drehfeldgradienten werden draht- und kontaktlos in den Magnetkreis einkoppelt und es wird eine topische Permeabilitätsänderung im Schaltbereich des Magnetkreises bewirkt.

Unter einem Induktionsbereich wird ein Bereich des Magnetkreises verstanden, an dem eine bezogen auf den Magnetkreis maximale Magnetflussänderung erreicht werden kann. Daher sind diese Bereiche besonders für eine induktive Nutzung, d.h. zur Erzeugung einer elektrischen Energie durch Induktion, geeignet.

Ein Permeabilitätsbereich beinhaltet Materialien unterschiedlicher magnetischer Eigenschaften, beispielsweise unterschiedlicher magnetischer Permeabilitäten. Durch eine Permeabilitätsänderung wird der Arbeitspunkt diese Materials verschoben, wie nachfolgend ausführlich erläutert wird.

An einem permanentmagnetischen Bereich ist vorzugsweise ein Magnet angeordnet, durch den ein Magnetfeld des Magnetkreises bereitgestellt ist.

Antiferromagnetische Materialien lassen sich anwendungsspezifisch und für einen breiten Temperaturbereich designen. Die Schichtung unterschiedlicher antiferromagnetischer, ferromagnetischer und paramagnetischer Materialien bzw. die Einteilung des Materials in derartige Bereiche erlaubt einen Einsatz bei geringeren Schaltschwellen / Feldstärken.

Die Erfindung ist wesentlich bestimmt durch ein magnetisch wirksames Schaltelement zur gezielten Veränderung der resultierenden effektiven Permeabilität in definierten Bereichen von Magnetkreisen und magnetische wirksamen Anordnungen zur topischen Bereitstellung von Energie.

Bei dem erfindungsgemäßem magnetisch wirksamen Schaltelement zur gezielten Veränderung der resultierenden effektiven Permeabilität in definierten Bereichen von Magnetkreisen und magnetische wirksamen Anordnungen (im Folgenden kurz als Magnetkreis bezeichnet) zur topischen Bereitstellung von Energie handelt es sich nicht um ein perpetuum mobile zweiter Art oder um ein System zur Gewinnung "Freier Energie" sondern um eine draht- und kontaktlose Möglichkeit der Energiebereitstellung mittels eines magnetisch wirksamen Schaltelements in einem Magnetkreis mit integrierten Permanentmagneten und Induktorspulen einerseits sowie einer räumlich getrennten, topisch platzier-, ausricht- und parametrierbaren magnetischen Wechsel-/Drehfeldquelle, die vorzugsweise elektrisch betrieben wird und lastabhängig reagiert. Das heißt Laständerungen des elektrischen Verbrauchers (elektrische Last) nach einer an einem Induktionsbereich angeordneten Induktionsspule im Magnetkreis führen zu Laständerungen bei der externen elektrischen, spulen- bzw. permanentmagnetischen Feldgenerierung.

Jede Last und jede Laständerung führt zwingend zu magnetokalorischen Effekten, welche thermodynamisch genutzt werden können.

Die extern draht- und kontaktlos weitgehend barrierefrei (außer sehr ferromagnetische Barrieren) zum Magnetkreis übertragbare bzw. im Magnetkreis inklusive Induktorspule generierbare Energie hängt einerseits vom schaltbaren materialspezifischen und anordnungsabhängigen Magnetflussänderungspotential sowie anderseits von der extern applizierbaren Schaltfrequenz ab.

Nachfolgend ist die grundlegende Wirkungsweise des magnetischen Schalters im Magnetkreis beschrieben.

Permanentmagnete in Magnetkreisen

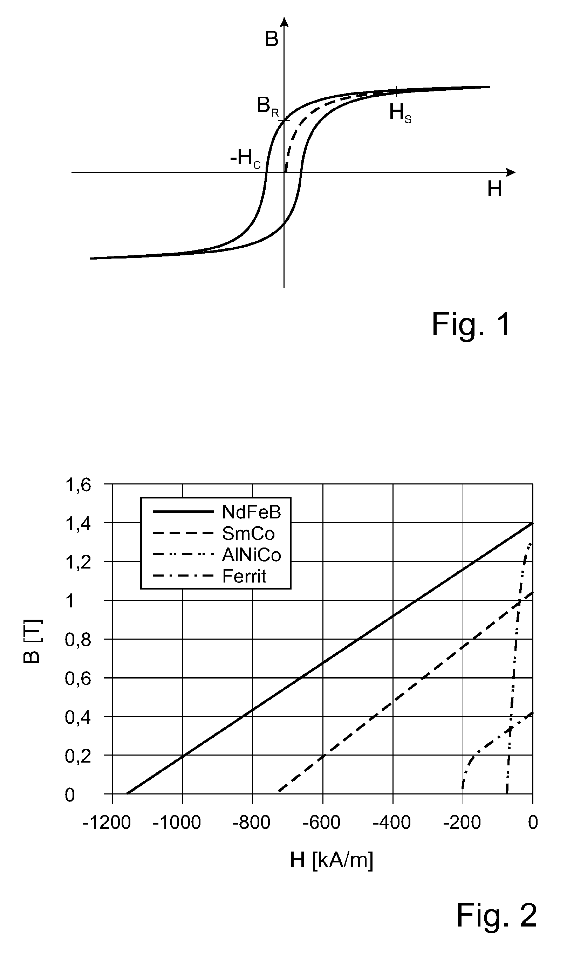

Bringt man ein magnetisches Material ohne remanente makroskopische Magnetisierung in ein betragsmäßig wachsendes externes magnetisches Feld, so steigt die Magnetisierung zunächst entsprechend der Neukurve des Materials in der Regel nichtlinear an (Fig. 1; gestrichelte Kurve). Erreicht man die Sättigungsmagnetisierung $H_s$ des Materials wächst die Flussdichte im Material nur noch proportional zur Feldstärke des externen Magnetfeldes. Der Proportionalitätsfaktor ist $\mu_0$, die Permeabilität des Vakuums. Handelt es sich bei dem magnetischen Material um ein Permanentmagnetmaterial wie beispielsweise Neodym-Eisen-Bor, verbleibt nach dem Abschalten des externen Feldes eine starke remanente Magnetisierung. Bei flüchtiger Betrachtung würde man erwarten, dass sich der dann entstandene Permanentmagnet nach dem Entfernen des initialen externen Feldes zur Magnetisierung im Remanenzpunkt (B, H)=(B_r, 0) befindet. Die Remanenzflussdichte $B_r$ würde im Magneten allerdings nur erreicht, wenn sich dieser in einem verlustfreien Magnetkreis befände. In allen realen Situationen gibt es allerdings immer materialbedingte magnetische Streuverluste. Zudem benötigt man in jedem praktisch relevanten Anwendungsfall einen Arbeitsspalt oder -bereich, an dem der Magnetkreis unterbrochen oder anderweitig modifiziert wird. In der Realität stellt sich daher bei der Nutzung von Permanentmagneten eine Kombination (B, H) =(B_A, H_A) aus Flussdichte B und Feldstärke H im Magneten ein, die im zweiten Quadraten des (B, H)-Koordinatensystems auf der Hysteresekurve des Materials, der sogenannten Entmagnetisierungskurve liegt und als Arbeitspunkt des Magneten bezeichnet wird. Ursache dafür ist die Ausbildung von Polen an der Oberfläche des Magneten aufgrund der Änderung der relativen Permeabilitäten $\mu_r$ an den Grenzflächen zu benachbarten Materialien oder auch dem Vakuum. Diese Polverteilung bewirkt ein bezüglich der Magnetisierungsrichtung entgegengesetzt gerichtetes Feld im Inneren des Magneten und reduziert dadurch entsprechend der Entmagnetisierungskurve die Flussdichte im Magneten. Fig. 2 zeigt typische Entmagnetisierungskurven einiger gebräuchlicher Magnetwerkstoffe.

Viele hartmagnetische Stoffe wie beispielsweise Neodym-Eisen-Bor und Samarium-Kobalt weisen praktisch eine konstante "starre" Magnetisierung M auf und haben eine quasi lineare Entmagnetisierungskurve. Dies kann man am Beispiel des Neodym-Eisen-Bors mit dem Materialgesetz zeigen. Es gilt

$$\mu_0 M = B - \mu_0 H$$

mit

$\mu_0$-Vakuumpermeabilität $(4\pi \cdot 10^{-7}\,{}^{Vs}/_{Am})$
**M** - Magnetisierung
**B** - magnetische Flussdichte
**H** - magnetische Feldstärke.

Für $(B, H) = (B_r, 0) = (1.4\,T, 0^{kA}/_m)$ erhält man

$$\mu_0 M = 1,4\ T$$

und für $(B, H) = (0, H_c) = (0T, -1130^{kA}/_m)$ folgt ebenfalls

$$\mu_0 M = 1,4\ T$$

Für die relative Permeabilität $\mu_r$ des Neodym-Eisen-Bor erhält man unter der Annahme einer linearen Entmagnetisierungskurve

$$\mu_r = \frac{\Delta B}{\Delta(\mu_0 H)} \approx \frac{B_r}{\mu_0 H_c} \approx 1$$

Permanentmagnete mit starrer Magnetisierung verhalten sich also im magnetischen Kreis nahezu wie Luft bzw. Vakuum.

Scherungsgerade und Arbeitspunkt von Magneten

Wie bereits oben beschrieben herrscht im Magneten eine negative Feldstärke. Dies kann man mit dem Materialgesetz und dem Durchflutungsgesetz erklären. Es gilt nämlich zum einen das Materialgesetz $\vec{B} = \mu_0(\vec{M} + \vec{H})$. Danach gilt im Luftraum außerhalb des Magneten wegen $M_{Luft} = 0$

$$\vec{B}_a = \mu_0 \vec{H}_a$$

das heißt die $\vec{B}$ - und $\vec{H}$-Felder sehen dort identisch aus. Dies kann im Inneren des Magneten nicht mehr gelten, denn dort erhält man

$$\vec{B}_i = \mu_0 (\vec{H}_i + \vec{M}).$$

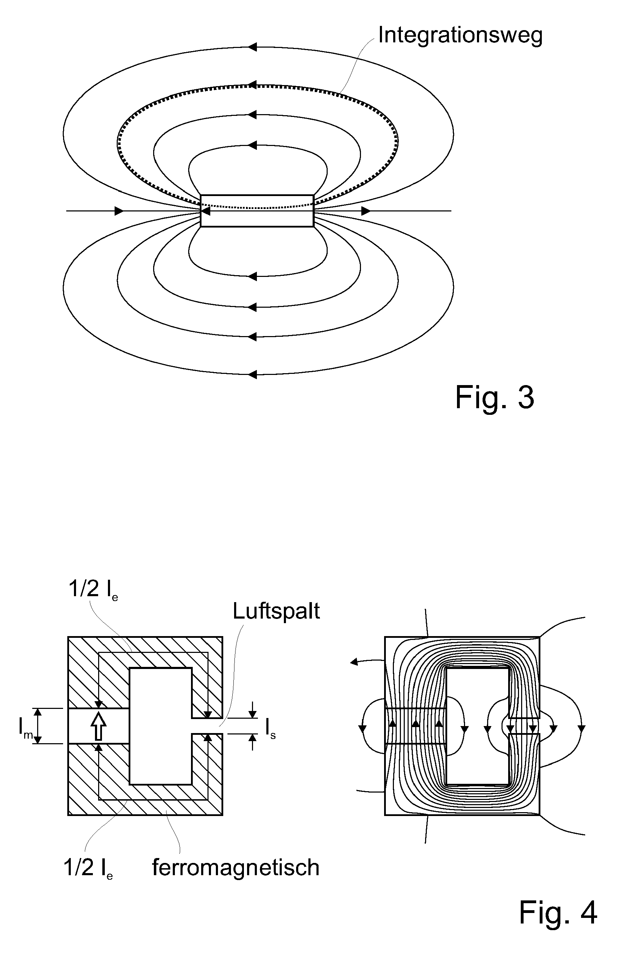

Das $\vec{B}$-Feld hat keine Quellen, d.h. die Feldlinien sind geschlossen. Dies gilt für das $\vec{H}$-Feld in Anwesenheit eines Magneten nicht mehr (Fig. 3). So folgt aus dem Durchflutungsgesetz

$$\oint \vec{H}\, d\vec{s} = \Theta$$

mit

$\Theta$ - magnetische Durchflutung
$d\vec{s}$ - Linienelement
$\oint$ - Ringintegral,

angewendet auf einen Umlauf, der außerhalb des Magneten eine $\vec{B}_a$ - oder $\vec{H}_a$ -Feldlinie ist, wegen der Abwesenheit elektrischer Ströme und damit $\Theta = 0$

$$\oint \vec{H}\,d\vec{s} = \oint_{\text{außen}} \vec{H_a}\,d\vec{s} + \oint_{\text{innen}} \vec{H_i}\,d\vec{s} = 0 \iff$$

$$\oint_{\text{außen}} \vec{H_a}\,d\vec{s} = - \oint_{\text{innen}} \vec{H_i}\,d\vec{s}$$

Das $\vec{H_i}$ - Feld entmagnetisiert also den Magneten, so dass er nicht mehr im Remanenzpunkt sondern in einem "tieferen" Punkt auf der Entmagnetisierungskurve arbeitet.

Zur Bestimmung des Arbeitspunktes eines Magneten muss der gesamte magnetische Kreis und das Umfeld des Magneten berücksichtigt werden. Fig. 4 zeigt einen unverzweigten Magnetkreis mit Luftspalt (linke Abbildung) und die Feldlinien der magnetischen Flussdichte (rechte Abbildung). Man erkennt eine Konzentration des Flusses im Kreis, aber auch Streuflüsse über den Luftspalt und den Magneten.

In Fig. 4 links sind die mittleren Längen des Magneten $l_m$, des Eisenweges $l_e$ und des Luftspaltes $l_s$ eingezeichnet. In Fig. 4 rechts sind die Verläufe von Magnetfeldlinien schematisch gezeigt. Mit diesen Bezeichnungen folgt aus dem Durchflutungsgesetz

$$H_m \cdot l_m + H_e \cdot l_e + H_s \cdot l_s = 0$$

und weiter wegen der Abwesenheit elektrischer Ströme ($\Theta = 0$)

$$H_m \cdot l_m + H_e \cdot l_e + H_s \cdot l_s = 0$$

mit $H_m$ - Feldstärke im Magneten, $H_e$ - Feldstärke im Eisenweg und $H_l$- Feldstärke im Luftspalt. Die Terme $R_{[.]} \cdot l_{[.]}$ können als magnetische "Spannungsabfälle" über den jeweiligen Bereichen des Magnetkreises interpretiert werden.

Da für die Permeabilität $\mu_e$ des Eisenweges im Regelfall $\mu_e \gg \mu_o$ gilt, kann der Term $H_e \cdot l_e$ in erster Näherung vernachlässigt werden. Es gilt also

$$H_m \cdot l_m + H_s \cdot l_s = 0$$

Bezeichnen $A_m$ und $A_s$ die mittleren Querschnittsflächen des Magneten bzw. des Luftspaltes und $B_m$ und $B_s$ die jeweiligen Flussdichten in Magnet und Luftspalt, dann ergeben sich die zugehörigen magnetischen Flüsse $\Phi_m$ und $\Phi_s$ im Magneten und im Luftspalt zu

$$\Phi_m = B_m \cdot A_m$$

$$\Phi_s = B_s \cdot A_s$$

Der magnetische Fluss im Luftspalt ist wegen der Streuverluste des Magnetkreises nie so groß wie der Fluss im Magneten. Dies wird durch einen Streufaktor $k_s$ mit $0 < k_s \leq 1$ berücksichtigt. Damit erhält man

$$B_s \cdot A_s = k_s \cdot B_m \cdot A_m \iff$$

$$B_s = \frac{k_s \cdot B_m \cdot A_m}{A_s}$$

Dann ergibt sich für die Feldstärke im Magneten mit $H_s = B_s/\mu_o$

$$H_m = -\frac{H_s \cdot l_s}{l_m} = -k_s \cdot \frac{l_s}{l_m} \cdot \frac{A_m}{A_s} \cdot \frac{B_m}{\mu_0}$$

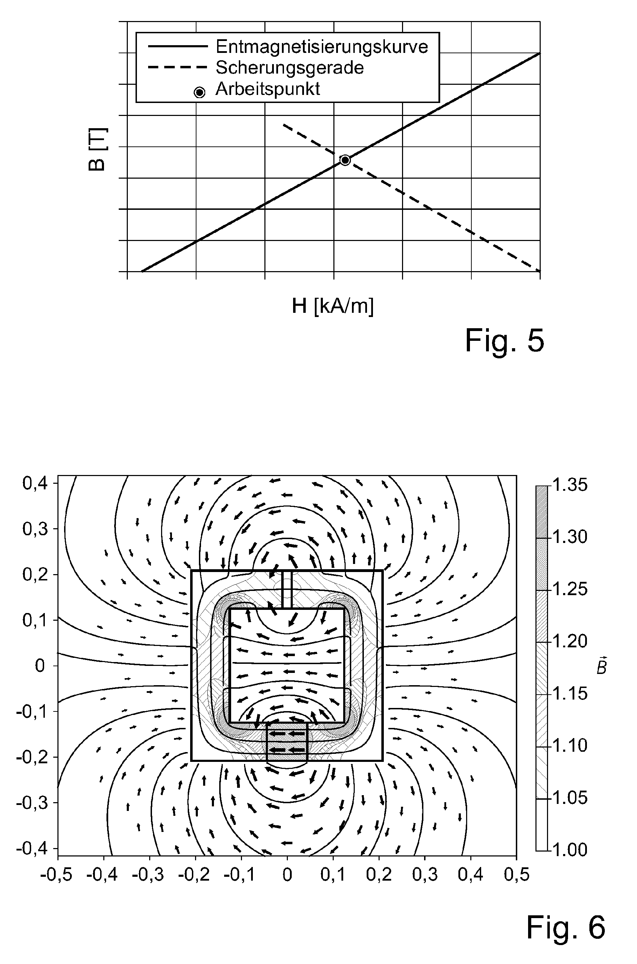

Dies ist die Gleichung der sogenannten Scherungsgerade. Der Arbeitspunkt des Magneten im betrachteten Magnetkreis ergibt sich damit als Schnittpunkt der Scherungsgeraden mit der Entmagnetisierungskurve des Magneten (vgl. Fig. 5).

Aus dem Materialgesetz folgt für die Flussdichte im Magneten

$$B_m = \mu_0(H_m + M_r) = \mu_0 H_m + \mu_0 M_r = \mu_0 H_m + B_r$$

mit der remanenten Magnetisierung $M_r$ und der Remanenzflussdichte $B_r$. Bei starrer Magnetisierung (siehe weiter oben) ist die Magnetisierung nicht von der Feldstärke abhängig und die Entmagnetisierungskurve linear. Der Arbeitspunkt $(B_m.H_m)$ des Magneten ergibt sich dann als Schnittpunkt zweier Geraden und man erhält

$$H_m = -\frac{k_s \cdot l_s \cdot A_m}{k_s \cdot l_s \cdot A_m + l_m \cdot A_s} \cdot \frac{B_r}{\mu_0}$$

$$B_m = \mu_0 H_m + B_r$$

Beispiel

Für einen 10x10x10 mm³-Neodym-Eisen-Bor-Magneten ($B_r = 1.4T$) in einem hochpermeablen Joch ($\mu_r = \infty$) mit einem Luftspalt von 1 mm Länge ergibt sich bei Vernachlässigung des Streuverlustes ($k_s = 1$) und unter der Annahme konstanter Querschnitte ($A_m = A_s = 100mm^2$) für die Feldstärke im Magneten

$$H_m = -\frac{k_s \cdot l_s \cdot A_m}{k_s \cdot l_s \cdot A_m + l_m \cdot A_s} \cdot \frac{B_r}{\mu_0} \quad \Leftrightarrow$$

$$H_m = -\frac{1 \cdot 1mm \cdot 100mm^2}{1 \cdot 1mm \cdot 100mm^2 + 10mm \cdot 100mm^2} \cdot 1 \cdot \frac{4T}{4\pi \cdot 10^{-7} \, Vs/Am} \quad \Leftrightarrow$$

$$H_m = -101,28 \frac{kA}{m}$$

und für die Flussdichte im Magneten

$$B_m = \mu_0 H_m + B_r \quad \Leftrightarrow$$

$$B_m = 4\pi \cdot 10^{-7} \, Vs/Am \cdot (-101280 \, A/m) + 1,4T \quad \Leftrightarrow$$

$$B_m = 1,27 \, T$$

Der Arbeitspunkt des Magneten im hochpermeablen Magnetkreis mit Luftspalt liegt also bei

$$(B_m, H_m) = \left(1,27T, -101,28 \frac{kA}{m}\right).$$

Folgerungen für das magnetisch wirksame Schaltelement

Würde man den Luftspalt mit einem hochpermeablen Material ($\mu_r = \infty$) schließen, folgte mit $I_s = 0$ aus

$$\mathrm{H_m} = -\frac{\mathrm{k_s \cdot l_s \cdot A_m}}{\mathrm{k_s \cdot l_s \cdot A_m + l_m \cdot A_s}} \cdot \frac{\mathrm{B_r}}{\mu_0} = 0,$$

dass im Magneten kein Feld herrscht. Damit würde gelten

$$\mathrm{B_m} = \mu_0 \mathrm{H_m} + \mathrm{B_r} = \mu_0 \cdot 0 + \mathrm{B_r} = \mathrm{B_r}.$$

Der Arbeitspunkt des Magneten liegt in diesem Fall im Remanenzpunkt ($B_r$, 0).

Unter Vernachlässigung des Streuflusses würde der Fluss $\Theta = \int B_r \, dA$ im gesamten Magnetkreis vorherrschen; im obigen Beispiel also bei $\Theta = = 1{,}4T \cdot 0{,}01m^2 = 1{,}4 \cdot 10^{-4}Vs$.

Beim Schalten von $\mu_r = \infty$ auf $\mu_r = 1$ würde der Fluss im Magnetkreis auf den oben berechneten Wert von $\Theta = 1{,}27T \cdot 0{,}01m^2 = 1{,}27 \cdot 10^{-4}$ Vs sinken. Die Differenz des Flusses von $\Delta\Theta = 1{,}3 \cdot 10^{-5}Vs$ entspricht der nutzbaren Flussänderung.

Wird $\mu_r$ nicht von den nur theoretisch erreichbaren Werten $\mu_r = \infty$ auf $\mu_r = 1$ geändert, sondern mit Hilfe des vorgeschlagenen magnetisch wirksamen Schaltelements von $\mu_r = \mu_1$ auf $\mu_r = \mu_2$ mit $\mu_1 \ll \mu_2$, so resultiert daraus ebenfalls eine nutzbare Flussänderung im Magnetkreis. In diesem Sinne ist das magnetisch wirksame Schaltelement als Schalter für den magnetischen Arbeitskreis zu betrachten.

Simulationsergebnisse

Eine genaue Bestimmung des Feld- und Flussdichteverteilung in einem Magnetkreis kann im Allgemeinen nur mit numerischen Methoden erfolgen. Dazu werden im Folgenden die Ergebnisse einer FEM-Simulation mit COMSOL Multiphysics 4.3, Module AC/DC widergegeben. Simuliert wurde der bereits oben als Beispiel angegebene unverzweigte Magnetkreis mit Permanentmagnet und Spalt, wobei die Permeabilität im Spalt variiert wurde und daraus die unterschiedlichen Feld- und Flussverteilungen im Magnetkreis und dessen Umgebung bestimmt wurden. Als Magnetmaterial wurde ein Hochleistungswerkstoff (z. B. Neodym-Eisen-Bor) mit einer Remanenzflussdichte von $B_r = 1.4T$ und "starrer" Magnetisierung angenommen. Die Größe des Magneten wurde auf 10x10x10 mm$^3$ festgelegt. Für das Material des Eisenkreises wurde eine relative Permeabilität von $\mu_{rs} = 500$ gewählt. Der gesamte Magnetkreis hatte eine quadratische Geometrie mit einer mittleren Ausdehnung von 50 mm x 50 mm und einen konstanten Querschnitt von 10x10 mm$^2$ über den gesamten magnetisch wirksamen Bereich. Es wurde ein zweidimensionales magnetostatisches Modell (COMSOL Multipyhsics, ACDC, Physikmodell mf - magnetic fields) verwendet.

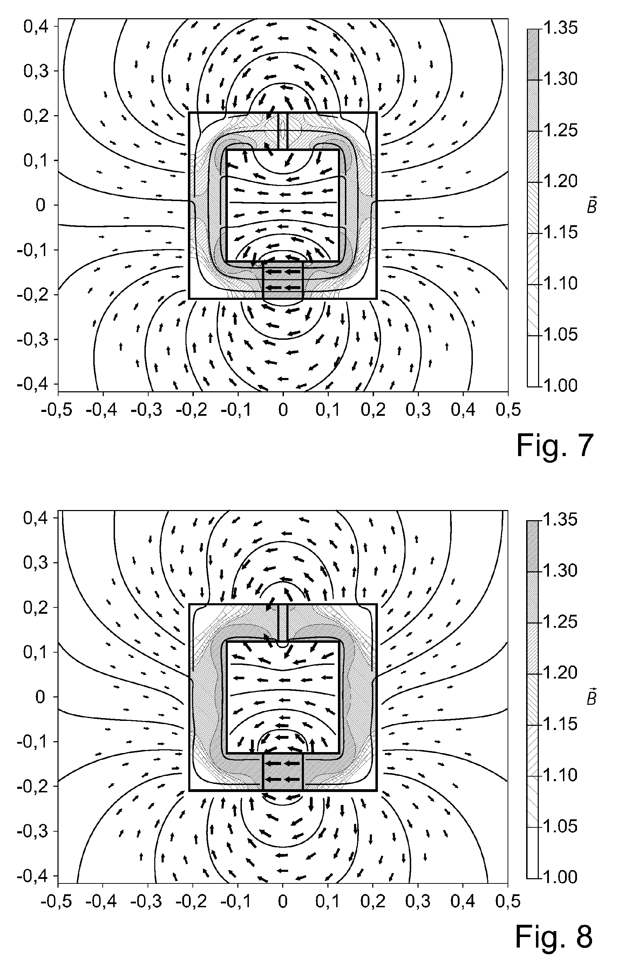

Die Ergebnisse der Simulation in Form der berechneten Feld und Flussdichteverteilungen sind in Fig. 6 bis Fig. 9 dargestellt. Skalierung und Grauwertdarstellung sind in allen vier Fällen identisch. Man kann erkennen, dass sich die magnetische Flussdichte (grauwertkodiert) mit steigender Permeabilität im Spalt an allen Stellen des Magnetkreises erhöht. Da der Querschnitt nicht variiert ist damit auch eine nutzbare Flussänderung verbunden. Parallel dazu verringert sich das magnetische Feld (pfeilkodiert).

Materialkombination für den Schichtaufbaus im Spalt

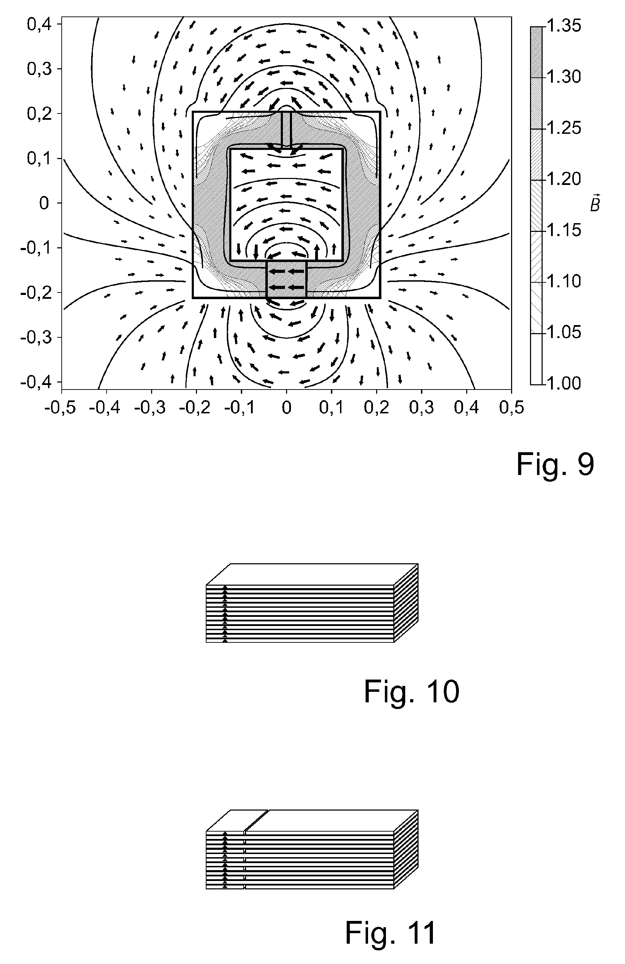

Das Material für das magnetische Schaltelement ist ein permeables Material, dessen Permeabilität beispielsweise der Permeabilität des Magnetkreismaterials entspricht. Dies kann alternierend mit einen Material geschichtet sein, dessen Permeabilität so gewählt ist, dass durch Einwirkung eines äußeren sekundären Magnetfeldes die resultierende Permeabilität im gesamten Magnetkreis effektiv verändert wird und zumindest an definierten Stellen zu einer Veränderung des magnetischen Flusses führt. Diese Materialfolge kann mehrfach geschichtet sein (Fig. 10 und Fig. 11). Es kann sich dabei um hart- und weichmagnetische Materialien handeln.

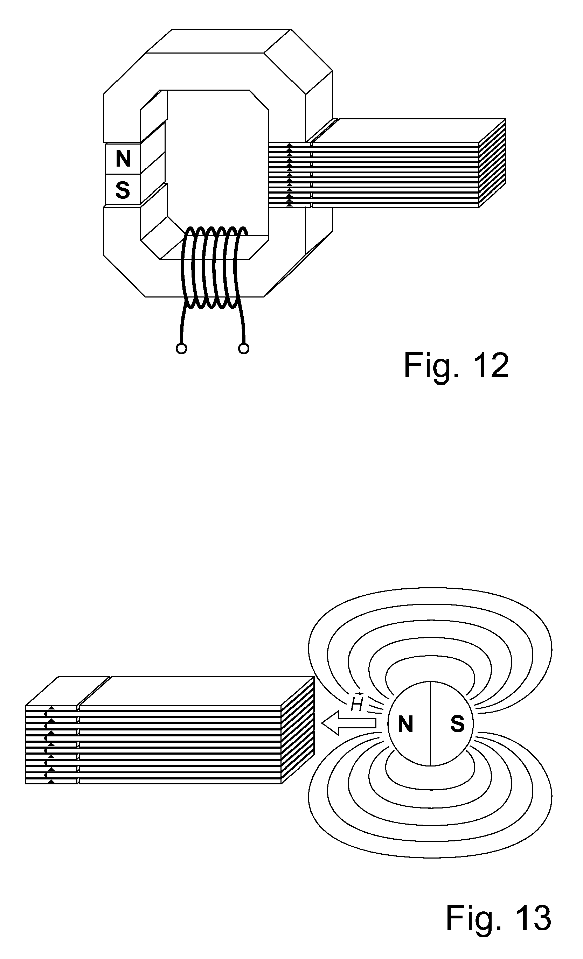

Bringt man dieses Element in den Arbeitsspalt eines beispielsweise mit einem Permanentmagneten magnetisch vorgespannten Magnetkreises, lässt sich mittels externem Magnetfeld die resultierende Permeabilität steuern. Die Ausführung wird vorteilhaft so gestaltet, dass der Spalt im Magnetkreis ohne äußeres Magnetfeld als geschlossen zu betrachten (Fig. 12) ist. Beim Einwirken eines äußeren Magnetfeldes, welches beispielsweise ein rotierender Permanentmagnet generiert (Fig. 13), wird die Materialfolge im Spalt derart ummagnetisiert, dass der magnetische Fluss im Spalt behindert wird. Dadurch wird ein Zustand erreicht, welcher einem mehr oder weniger breiten Luftspalt entspricht.

Das magnetische Schaltelement ist vorzugsweise durch eine Materialkombination aus Schichten / Bereichen, die unterschiedlich magnetisierbar sind gebildet. Die unterschiedliche Magnetisierbarkeit bezieht sich beispielsweise auf die Stärke der Magnetisierbarkeit, die Permeabilität der Materialien und die Richtung / Anisotropie der Magnetisierbarkeit.

Es sind Kombinationen von Materialien aus ferromagnetischen, antiferromagnetischen und paramagnetischen Materialien mit mehr oder weniger ausgeprägtem magnetokalorischem Effekt verwendbar.

Aus der Änderung des magnetischen Flusses im Spalt, bedingt durch das äußere Magnetfeld ergeben sich auch Flussänderung in den unterschiedlichen Bereichen des Magnetkreises, beispielsweise in dessen Schenkeln und im Permanentmagneten an sich.

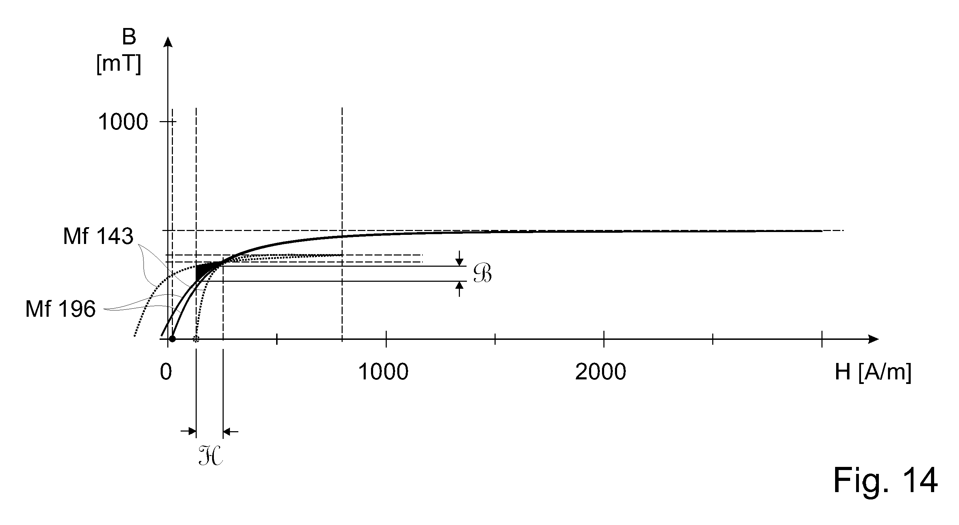

Handelt es sich bei der Materialabfolge um eine Schichtung von hart- und weichmagnetischen Materialien (harte und weiche ferromagnetische Materialien), entspricht dies einer antiferromagnetischen Anordnung zweier Materialien. Ein Beispiel für die Materialauswahl ist im folgenden B-H-Diagramm (Fig. 14) dargestellt. Mf143 und Mf196 sind beispielhaft ausgewählte ferritische Materialien.

Die Auswahl der Materialien für das so gestaltete magnetische Schaltelement ist hier nur beispielhaft angegeben. Sie muss auf die Verhältnisse des Magnetkreises mit Permanentmagneten, magnetischen Leitern und Arbeitsspalt (Spalt) angepasst werden. Insbesondere kann auch die Anordnung des Materials des magnetischen Schaltelements im Arbeitsspalt unterschiedlich gestaltet werden. Vorteilhaft ist beispielsweise die Herausführung des Schaltelements aus dem Arbeitsspalt in den magnetischen Leitern zur Bündelung des externen Magnetfeldes bereits außerhalb des Magnetkreises.

Das Schaltermaterial für den Spalt kann ein magnetokalorisches Material sein. Bei diesen Materialien tritt eine hohe feldinduzierte Entropiedifferenz aufgrund einer zusätzlichen feldinduzierten Phasenumwandlung auf. Dies begrenzt aber die Einsatztemperatur. So ist z. B. Gadolinium (Tc = 19,3 °C) unterhalb von 6 °C und oberhalb 27°C nicht mehr effektiv magnetokalorisch wirksam.

Eine feldinduzierte Entropieänderung tritt in jedem magnetischen Material auf, besonders in Materialien mit besonderer Struktur (Cuprostilbit) und geschichteten Materialien unterschiedlicher magnetischer Eigenschaften. Diese ist jedoch wesentlich geringer als in den magnetokalorischen Materialien. Die geschichteten Materialien haben aber den Vorteil der Unabhängigkeit dieses Effektes von der Neel- bzw. Curietemperatur.

Wird dem System Energie entzogen (auch in Form von elektrischer Energie) muss sich das System abkühlen. Die Größe dieses Effektes ist stark von den Materialparametern, den Umgebungsbedingungen und der Betriebsweise (Frequenz der externen Feldänderung) abhängig. Dessen Verhältnis zum Wärmegewinn über die Gegeninduktion einer belasteten Spule und kann deshalb positiv wie negativ sein.

Unter dem magnetokalorischen Effekt wird die Eigenschaft einiger Materialien verstanden, sich bei Einwirkung eines Magnetfelds zu erwärmen. Wird das Magnetfeld wieder abgeschwächt oder ganz entfernt, kühlt sich das Material wieder ab. Vereinfacht gesagt, wird dieser Effekt durch eine Ausrichtung (Erhöhung der Ordnung) der magnetischen Momente des Materials bei Anliegen eines starken Magnetfelds erreicht. Wird das Magnetfeld entfernt, sinkt die Ordnung, d.h. der Grad der Ausrichtung, der magnetischen Momente wieder ab (siehe z. B. Stöcker, H., 2000, Taschenbuch der Physik, 4. Aufl.). Ein guter Überblick zu diesem Thema ist durch Fähler et al, (2012, Advanced Engineering Materials 14: 10-19) gegeben.

Durch die Ausrichtung der magnetischen Momente werden auch die magnetischen Eigenschaften des Materials beeinflusst und vorübergehend verändert. Eine wichtige gezielt beeinflussbare Größe ist die in dem Material vorliegende magnetische Flussdichte (Magnetflussdichte). Eine gesteuerte Veränderung der magnetischen Flussdichte erlaubt beispielsweise die Verwendung eines magnetokalorischen Materials zur Steuerung von elektrischen Schaltungen.

Die Intensität des Magnetflusses im Magnetkreis ist durch Variation der Anordnung der magnetisch wirksamen Schaltelemente möglich. Dabei kann die Anordnung der magnetischen Schaltelemente beispielsweise hinsichtlich ihrer Anzahl sowie ihrer räumlichen Anordnung im Magnetkreis variiert sein.

Eine Beeinflussung der Intensität des Magnetflusses im Magnetkreises ist auch durch die geometrische Gestaltung des Magnetkreises / der magnetisch wirksamen Anordnung möglich. Beispielsweise kann der Magnetkreis als ein unverzweigter oder verzweigter Magnetkreis gestaltet sein. Außerdem kann die Anzahl und die räumliche Anordnung der Arbeitsspalte (Spalt) variiert sein.

Das erfindungsgemäße magnetische Schaltelement, besteht aus einer Schichten- / Bereichsfolge aus übereinander aufgestapelten Schichten bzw. nebeneinander angeordneten Bereichen. Vorzugsweise bestehen die Bereiche bzw. Schichten aus mindestens einem ersten ferromagnetisch harten Material mit einer ersten Sättigungsflussdichte, mindestens einem zweiten antiferromagnetischen oder einem ferromagnetisch weichen Material und mindestens einem dritten ferromagnetisch harten Material mit einer dritten Sättigungsflussdichte. Das erste wie auch dritte Material können identisch sein. Das erste wie auch dritte Material können in weiteren Ausführungen der Erfindung auch gleichartig sein, z. B. ähnliche magnetische Eigenschaften aufweisen.

In weiteren vorteilhaften Anordnungen fällt das erste und dritte Material mit dem Magnetkreismaterial zusammen. In allen Fällen können Materialien mit anisotropischen magnetischen Eigenschaften in unterschiedlicher Ausrichtung und Anordnung zum Magnetkreis eingesetzt werden.

Es können in speziellen Ausführungsvarianten des erfindungsgemäßen magnetischen Schaltelements mehrere Sequenzen von erstem, zweitem und drittem Material zum Beispiel in Gestalt einer Schichtung angeordnet sein.

Unter der Sättigungsflussdichte wird diejenige magnetische Flussdichte verstanden, die sich bei einem Material einstellt, wenn dieses bedingt durch ein einwirkendes Magnetfeld seine Sättigungsmagnetisierung erreicht.

In einer vorteilhaften Anordnungsausführung sind die jeweiligen Sättigungsflussdichten innerhalb einer Materialabfolge, bspw. die Sättigungsflussdichte des ersten und zweiten Materials, voneinander verschieden. Dabei weist die erste Sättigungsflussdichte immer höhere Werte als die zweite Sättigungsflussdichte auf. Materialien mit voneinander verschiedenen Sättigungsflussdichten im Sinne der Beschreibung sind beispielsweise Lanthan-Strontium-Manganoxide (La-Sr-MnO, LSMO) mit unterschiedlichen Lanthan-Strontium-Verhältnissen oder Magnesium-Kupfer-Zink-Ferrite (Mg-Cu-Zn-Ferrite) mit unterschiedlichen Kupfer-Magnesium-Verhältnissen.

Bei einer wie bspw. oben angeführten Schichtabfolge von magnetisch hartem-weichemhartem Material liegen die Werte für die erste Sättigungsflussdichte vorzugsweise in einem Bereich von 400 bis 600 mT, während die Werte für die zweite Sättigungsflussdichte in einem Bereich von 500 bis 1000 mT liegen. Es ist in diesem Fall von Bedeutung für die Erfindung, dass das Material der ersten ferromagnetischen Schicht bereits bei geringeren Magnetfeldstärken eine Sättigungsflussdichte erreicht als das jeweils gewählte Material der zweiten ferromagnetischen Schicht. Der Wert der dritten Sättigungsflussdichte für die dritte Schicht liegt wiederum vorzugsweise in einem Bereich von 400 bis 600 mT. Diese Schicht-/Bereichsfolge stellt somit eine antiferromagnetische Schicht-/Bereichsfolge dar.

Die antiferromagnetische Schicht- / Bereichsfolge kann in einer bevorzugten Ausführung des erfindungsgemäßen Schalters mehrfach wiederholt, in Form eines Laminats aufgebaut sein. Eine der antiferromagnetischen Schicht-/ Bereichsfolgen sollte vorzugsweise in einer Dicke von 100 bis 300 $\mu$m ausgebildet sein.

Durch das erfindungsgemäße magnetische Schaltelement bspw. in Gestalt einer antiferromagnetischen Schicht- / Bereichsfolge kann vorteilhaft erreicht werden, dass der Magnetfluss im gesamten Magnetkreis über große Distanzen geschaltet bzw. definiert verändert werden kann. Durch das Zusammenspiel und die Anordnung aller Materialien des Schaltelementes und die vorteilhafte feldbündelnde Integration in den Magnetkreis ist ein sensitiv, präzise steuerbarer magnetischer Schalter geschaffen.

Die Wirkung der Materialabfolge des erfindungsgemäßen Schaltelements wird noch dadurch verstärkt, dass die Schichten / Bereiche in Ebenen verlaufen, die sich vorzugsweise orthogonal zu den Flächen der Arbeitsspalte des Magnetkreises, z. B. den Schichten eines ferritischen Laminats eines Jochs, erstrecken, in welcher das erfindungsgemäße Schaltelement betrieben wird. Durch eine zueinander orthogonale ausgerichtete Anordnung treten die Effekte von Magnetisierungsvorgängen (sowohl Auf- als auch Abmagnetisierung) in einer Anordnung von Schaltelement und Vorrichtung besonders wirkungsvoll miteinander in Wechselwirkung.

Das Material der magnetischen Leiter kann vorzugsweise ein ferritisches Laminat, beispielsweise bestehend aus 50 Folien von je 100 $\mu$m Dicke sein. Das ferritische Laminat kann gesintert sein. Nach einem Sintervorgang weist das ferritische Laminat beispielsweise eine Höhe von 5 mm auf. Dadurch wird vorteilhaft erreicht, dass Wirbelströme vermieden werden und die Querempfindlichkeit der nachgelagerten elektrischen Verbraucher negativ beeinflusst wird.

Ein Magnetkreis mit einem erfindungsgemäßen Schaltelement kann zusammen mit einer Induktorspule verbaut sein, welche die magnetischen Flussänderungen in elektrische Energie wandelt und dem Verbraucher zuführt. Eine vorteilhafte Anordnung von Magnetkreis mit Induktionsspule weist ein durch einen ersten Spalt und durch einen zweiten Spalt in Jochabschnitte geteilten Magnetkreis auf. Dabei sind der erste Spalt und der zweite Spalt jeweils durch Stirnflächen der Jochabschnitte begrenzt. Kennzeichnend für die Anordnung ist, dass in dem ersten Spalt ein erfindungsgemäßes magnetisches Schaltelement angeordnet ist. Die Schichten / Bereiche des magnetischen Schaltelements sind parallel zu den, den ersten Spalt begrenzenden, Stirnflächen der Jochabschnitte angeordnet. Außerdem ist in dem zweiten Spalt ein Permanentmagnet angeordnet. Die Induktionsspule ist vorteilhaft in Bereichen der Jochabschnitte mit starken Flussänderungen angeordnet. Die Ausgestaltung der Induktorspule kann gewickelt um die Jochschenkel sowie auch planar in definierten Ebenen erfolgen.

Durch ein durch den Permanentmagneten bewirktes und durch die Jochabschnitte gebündeltes Magnetfeld befindet sich der Magnetkreis in einem ersten Arbeitspunkt, der durch die vorherrschenden Flussdichten und die korrespondierenden Feldstärken charakterisiert ist. Die Applizierung eines externen Magnetfelds und die damit einhergehende Veränderung der Permeabilität im Schaltelement bewirkt eine Verschiebung der magnetischen Verhältnisse im gesamten Magnetkreis hin zu einem zweiten Arbeitspunkt. Die Differenz der Flussdichten zwischen erstem und zweitem Arbeitspunkt kann als Flussänderung induktiv in elektrisch nutzbare Energie gewandelt werden. Es ist vorteilhaft, wenn durch die Auswahl der Dimensionen, der magnetischen Eigenschaften und der räumlichen Lage des Permanentmagneten im Magnetkreis sowie durch Berücksichtigung von Wechselwirkungen zwischen Permanentmagnet und Jochabschnitten, das magnetische Schaltelement in der Nähe eines Arbeitspunktes mit starkem Anstieg der Entmagnetisierungskurve gehalten ist. Das Schaltelement ist durch die Wirkung des Permanentmagneten sozusagen bereits magnetisch vorgespannt.

Der Magnetkreis inklusive Permanentmagnet, Induktorspule und Schaltelement kann ganz oder teilweise unter Nutzung der LTCC-Technologie (Low Temperature Cofired Ceramic) hergestellt sein. Die komplette Anordnung kann in ein- oder mehrschichtige Trägermaterialien (Basislaminat) aus dielektrischem Material, z. B. Bariumtitanat, integriert sein, welches mit den magnetisch oder induktiv wirksamen Materialien ebenfalls im LTCC-Verfahren gesintert werden kann.

Zur Ausführung der Schaltfunktion sind vorteilhaft keine beweglichen Teile oder zusätzliche externe elektronische Steuerimpulse notwendig. Das Schalten des erfindungsgemäßen magnetischen Schalters wird durch ein entsprechend konfiguriertes wechselndes äußeres Magnetfeld (externes Magnetfeld) bewirkt.

Die Aufgabe wird ferner durch eine Anordnung eines Magnetkreises inklusive magnetischem Schaltelement, Induktorspule und Permanentmagnet und einer Vorrichtung zur Erzeugung eines zweiten veränderlichen Magnetfelds gelöst, wobei die Vorrichtung zur Erzeugung des zweiten veränderlichen Magnetfelds so angeordnet ist, dass mindestens das magnetische Schaltelement von Magnetfeldlinien des zweiten veränderlichen Magnetfelds durchdrungen werden kann und die Eigenschaften des zweiten veränderlichen Magnetfelds so gewählt sind, dass vorzugsweise periodisch oder alternierend ein Anfahren des ersten und zweiten Arbeitspunktes gewährleistet ist. Gleichbedeutend ist, dass durch das zweite veränderliche Magnetfeld in der erfindungsgemäßen Anordnung die resultierende Permeabilität des Magnetkreises räumlich-zeitlich geändert wird. Aufgrund der Wirkung der veränderlichen Flussdichten im Magnetkreis wird letztendlich eine elektrische Spannung in der Induktorspule induziert.

Das zweite veränderliche (externe, äußere) Magnetfeld kann beispielsweise durch einen rotierenden diametral magnetisierten starken Permanentmagneten realisiert sein. Der Abstand zwischen dem äußeren, rotierenden Permanentmagneten und dem oben beschriebenen magnetischen Schalter ist von der Dimensionierung des Permanentmagneten im Magnetkreis und des äußeren rotierenden Permanentmagneten abhängig. Durch die Wahl der magnetischen Eigenschaften ist ein gewünschter Abstand zwischen äußeren rotierenden Permanentmagneten und magnetischem Schalter einstellbar. Aufgrund der Rotation des Permanentmagneten entsteht ein magnetisches Drehfeld. Befindet sich das magnetische Schaltelement an einem bestimmten Ort des magnetischen Drehfeldes, so ist es einem sich in Richtung und Betrag änderndem magnetischen Feld ausgesetzt. Dadurch wird bei entsprechender Dimensionierung des Permanentmagneten im Magnetkreis und dem das äußere Drehfeld erzeugenden Permanentmagneten eine Ummagnetisierung der Schichten/Bereiche des Schaltelements bewirkt, wodurch die Schaltwirkung erzeugt ist. Es werden keine ortsveränderlichen Teile oder Erregerspannungen am Ort des Schaltelements benötigt.

Die nutzbare Energie stammt aus der magnetisch vermittelten Energie des externen Feldes (z. B. Energieaufnahme des Motors zum Antrieb des Permanentmagneten oder Stromaufnahme einer Spulenanordnung zur elektrischen Felderzeugung) und ggf. aus thermischen Anteilen bedingt durch magnetokalorische Effekte in den beteiligten Materialien (Magnetkreis und Schaltelement). In diesem Sinne ist die erfindungsgemäße Anordnung ein Energie-Harvester im Sinne eines Transducers, der eingebrachte oder resultierende Gradienten wandelt.

Durch das Schalten wird in der am Magnetkreis befindlichen Spule (oder in den am Magnetkreis befindlichen Spulen) als Wandler eine ständige Änderung des magnetischen Flusses erreicht. Die Spannung wird durch die Frequenz der Ummagnetisierung (Impulsdauer, Anstiegsflanke der Flussänderung) bestimmt.

Die Stärke des am Schaltelement herrschenden Feldes bestimmt die Flussdichte im gesamten Magnetkreis. Daher ist das Lastverhalten durch die Materialauswahl, die geometrische Anordnung der magnetischen Leiter und der Arbeitsspalte (Position und Anzahl) sowie der darin enthaltenen Materialmenge dimensionierbar.

Ein berührungs- und drahtloser Betrieb einer magnetflussschaltenden bzw. einer magnetflusssteuernden Anordnung kann mittels des externen Magnetfelds erfolgen.Dabei kann das externe Magnetfeld ein rotierendes, ein richtungsmäßig definiert alternierendes Feld aber auch ein unregelmäßig variierendes Feld sein.

Das externe Feld kann explizit, beispielsweise durch einen Motor / einen Antrieb mit Permanentmagnet oder durch ein elektrisch generiertes Magnetfeld bereitgestellt werden, oder, bei wenigstens temporärer Existenz, auch aus der Umgebung abgegriffen werden. Letztere Möglichkeit stellt ein Energy-Harvesting im Sinne des Abgriffes von eingebrachten oder existierenden magnetischen Gradienten dar.

Die topische Bereitstellung von Energie wird durch die erfindungsgemäße Anordnung von einem an sich statischenmagnetischen Arbeitskreis mit magnetischem Schaltelement und externer dynamischer Magnetfelderzeugung gewährleistet. Dabei wird die Bereitstellung und Übertragung der Energie primär durch die externe Magnetfelderzeugung und die Wandlung durch den magnetischen Arbeitskreis mit magnetischem Schaltelement und Induktorspule realisiert. Das magnetische Schaltelement dynamisiert den an sich statischen magnetischen Arbeitskreis, wodurch dieser zum Energietransducer wird.

Zudem ist der autonom energetisch wirksame Magnetkreis über die extern steuerbare Schaltfrequenz leistungsmäßig definiert beeinflussbar.

Die Erfindung wird nachfolgend anhand von Ausführungsbeispielen und Abbildungen näher beschrieben. Es zeigen:

Fig. 15    eine schematische Darstellung eines ersten Ausführungsbeispiels eines erfindungsgemäßen magnetischen Schalters mit Magnetfeldlinien,

Fig. 16   eine schematische Darstellung des ersten Ausführungsbeispiels eines erfindungsgemäßen magnetischen Schalters mit Magnetfeldlinien bei Einwirkung eines Magnetfeldes,

Fig. 17   ein erstes Ausführungsbeispiel eines Jochs mit zwei Jochabschnitten,

Fig. 18   ein erstes Ausführungsbeispiel eines Basislaminats für ein Joch,

Fig. 19   ein erstes Ausführungsbeispiel eines erfindungsgemäßen magnetischen Arbeitskreises,

Fig. 20   ein zweites Ausführungsbeispiel eines erfindungsgemäßen magnetischen Arbeitskreises und rotierendem Permanentmagnet und Induktorspule

Fig. 21   ein drittes Ausführungsbeispiel eines erfindungsgemäßen magnetischen Arbeitskreises.

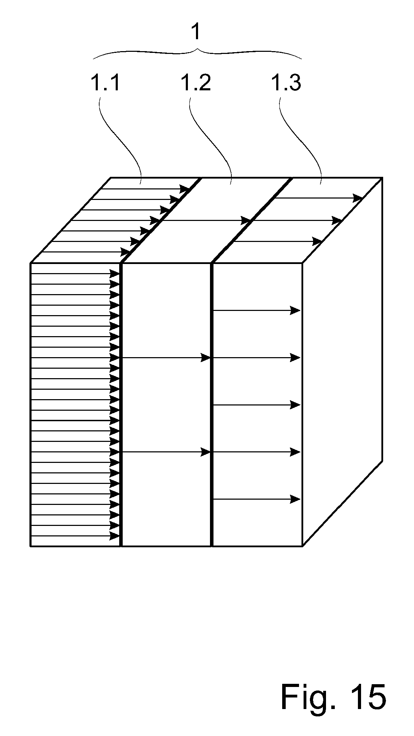

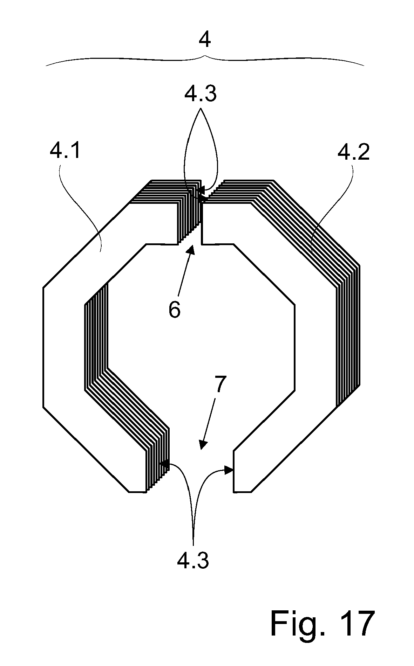

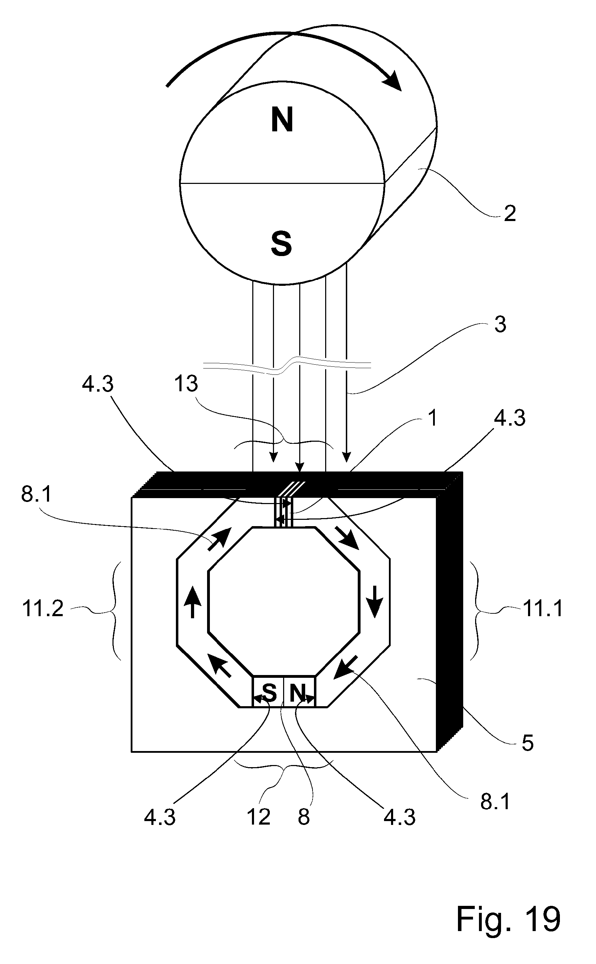

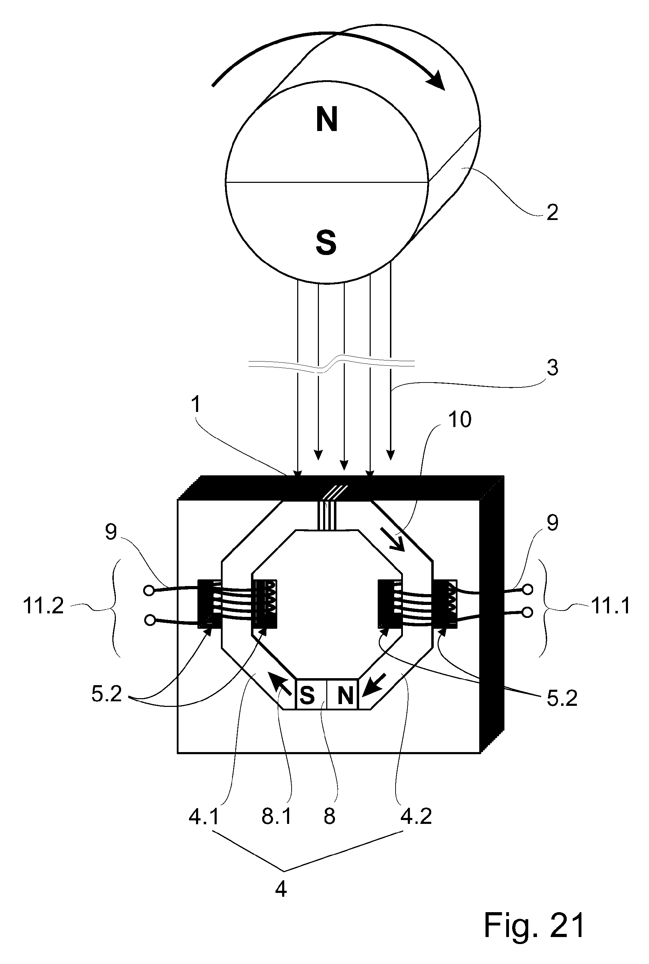

Die wesentlichen Elemente eines erfindungsgemäßen magnetischen Schaltelements 1 sind eine erste ferromagnetisch harte Schicht 1.1, eine zweite ferromagnetisch weiche Schicht 1.2 und eine dritte ferromagnetisch harte Schicht 1.3 (Fig. 15).
Die zweite ferromagnetische Schicht 1.2 ist zwischen den beiden ferromagnetischen Schichten 1.1 und 1.3 angeordnet. Alle drei Schichten 1.1 bis 1.3 grenzen unmittelbar aneinander an und sind zueinander parallel ausgerichtet. Die erste ferromagnetische Schicht 1.1 besteht aus einem Material mit ferromagnetischen Eigenschaften, welches eine erste Sättigungsflussdichte von 600 mT aufweist. Die zweite ferromagnetische Schicht 1.2 besteht aus einem Material, das eine zweite Sättigungsflussdichte von 1000 mT aufweist. Das Material der dritten ferromagnetischen Schicht 1.3 weist eine dritte Sättigungsflussdichte von 500 mT auf.

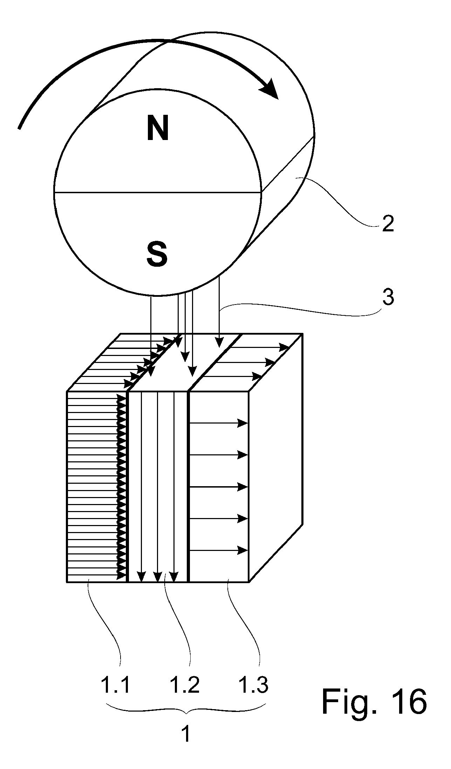

In Fig. 16 ist dasselbe Schaltelement 1 wie in Fig. 15 gezeigt. Zusätzlich ist aber ein rotierender Permanentmagnet 2 in Zylinderform vorhanden, der um seine Längsachse rotierbar ist. Durch die Bewegung des rotierenden Permanentmagneten 2 (Rotationsrichtung durch gebogenen Pfeil gezeigt) ist ein zweites veränderliches Magnetfeld 3 (einige seiner Magnetfeldlinien sind durch Pfeile angedeutet) erzeugt. Der rotierende Permanentmagnet 2 ist so angeordnet, dass Magnetfeldlinien des zweiten veränderlichen Magnetfelds 3 mindestens auf die erste bis dritte Schicht 1.1, 1.2, 1.3 einwirken.
Die Funktionsweise des magnetischen Schaltelements 1 (auch kurz: Schalter 1) wird anhand der beiden Fig. 15 und Fig. 16 vereinfachend erläutert. Es wird vorausgesetzt, dass der Schalter 1 in einem Magnetfeld 8.1 (hier nicht gezeigt, siehe Fig. 19 und Fig. 21) angeordnet ist, dessen Wirkung durch schematisch gezeigte Magnetfeldlinien veranschaulicht ist. Die Magnetfeldlinien sind in den einzelnen Schichten 1.1 bis 1.3 durch Pfeile dargestellt. Die Richtung der Pfeile gibt beispielhaft die Richtung der Magnetfeldlinien und des magnetischen Flusses an. Die Anzahl der Pfeile veranschaulicht die magnetische Flussdichte. Das zweite veränderliche Magnetfeld 3 ist ein externes oder äußeres Magnetfeld, dessen Magnetfeldlinien orthogonal zu den Magnetfeldlinien des Magnetfelds 8.1 (ein inneres Magnetfeld) stehen. Die Magnetfeldlinien des Magnetfelds 8.1 verlaufen in der Richtung der Pfeile gemäß Fig. 15 und der Pfeile der ersten ferromagnetischen Schicht 1.1 oder auch der dritten Schicht 1.3.
Wirkt das zweite veränderliche Magnetfeld 3 derart auf die erste (1.1) und dritte (1.3) ferromagnetische Schicht ein (Fig. 16), so sind deren Sättigungsflussdichtengerade noch nicht erreicht. Die resultierende effektive Magnetisierung der zweiten ferromagnetischen Schicht 1.2 in Richtung des magnetischen Arbeitskreises wird dabei deutlich reduziert und bewegt sich aus ihrem Sättigungsbereich heraus. Dadurch ist das Verhalten des Materials der ferromagnetischen Schichtfolge dahingehend verändert, dass dieses effektiv weniger magnetisch permeabel ist. Der Schalter ist "ausgeschaltet". Diese Veränderung ist durch die veränderte Ausrichtung der Magnetfeldlinien der zweiten ferromagnetischen Schicht 1.2 in Fig. 16 symbolisiert. Die zweite ferromagnetische Schicht 1.2 wirkt in diesem Zustand als eine Sperrschicht gegenüber dem magnetischen Fluss. Bei einer weiteren Bewegung des rotierenden Permanentmagneten 2 ist der Einfluss des zweiten veränderlichen Magnetfelds 3 auf die zweite ferromagnetische Schicht 1.2 wiederum verändert. Wird der Wert der zweiten Sättigungsflussdichte durch eine Abnahme der Stärke des zweiten veränderlichen Magnetfelds 3 wieder überschritten, wird die zweite ferromagnetische Schicht 1.2 wieder magnetisch permeabel und der Schalter 1 ist "eingeschaltet".
Ein aus einem ersten Jochabschnitt 4.1 und einem zweiten Jochabschnitt 4.2 bestehendes Joch 4 ist in Fig. 17 gezeigt. Die ersten und zweiten Jochabschnitte 4.1, 4.2 sind jeweils gewinkelt U-förmig gestaltet und aus einem ferritischen Laminat von 50 parallel zueinander angeordneten Folien eines ferritischen Materials von je 100 $\mu$m Dicke gebildet (angedeutet gezeigt). Beide Jochabschnitte 4.1, 4.2 wurden mittels LTTC-Technologie hergestellt. Die einzelnen Ebenen der Folien erstrecken sich in Längsausdehnung der Jochabschnitte 4.1, 4.2. (Laminierungsrichtung). An den Enden der Jochabschnitte 4.1, 4.2 sind jeweils Stirnflächen 4.3 vorhanden, an denen die Schichten des ferritischen Laminats enden. Die Jochabschnitte 4.1, 4.2 sind so dimensioniert, dass diese so zueinander angeordnet werden können, dass die Laminierungsrichtungen der Jochabschnitte 4.1 und 4.2 gleich sind und jeweils eine der Stirnflächen 4.3 des ersten Jochabschnitts 4.1 jeweils einer der Stirnflächen 4.3 des zweiten Jochabschnitts 4.2 gegenüberliegen.

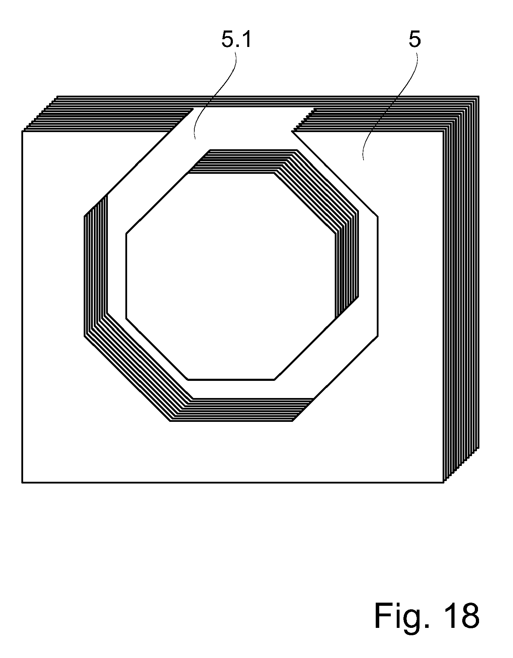

In Fig. 18 ist ein Basislaminat 5 aus Schichten des dielektrischen Materials Bariumtitanat. Das Basislaminat 5 weist eine Ausnehmung 5.1 auf, in die jeweils ein erster und ein zweiter Jochabschnitt 4.1, 4.2 formschlüssig einlegbar sind. Die Ausnehmung 5.1 ist so gestaltet, dass bei eingelegten ersten und zweiten Jochabschnitten 4.1, 4.2 zwischen den sich gegenüberliegenden Stirnflächen 4.3 ein erster Spalt 6 und ein zweiter Spalt 7 (siehe Fig. 17,19, 20 und 21) erhalten bleibt.

Ein Basislaminat 5 mit eingelegten erstem und zweitem Jochabschnitt 4.1, 4.2 ist in Fig. 19 als erstes Ausführungsbeispiel eines magnetischen Arbeitskreises ohne Induktorspule gezeigt. In dem ersten Spalt 6 ist ein magnetischer Schalter 1 angeordnet. Dieser füllt den ersten Spalt 6 vollständig aus und entspricht in seiner Dimensionierung den an ihn angrenzenden Stirnflächen 4.3. In dem zweiten Spalt 7 ist ein Permanentmagnet 8 vorhanden. Dessen jeweiligen Pole (mit "S" bzw. mit "N" bezeichnet) stehen mit den jeweils angrenzenden Stirnflächen 4.3 in Berührung. Durch den Permanentmagneten 8 ist ein Magnetfeld 8.1 bewirkt, dessen Magnetfeldlinien (durch Pfeile symbolisiert) durch das Joch 4 gebündelt und gerichtet sind. Die Magnetfeldlinien durchdringen auch den magnetischen Schalter 1. Der Permanentmagnet 8 ist so gewählt, dass durch das von ihm bewirkte Magnetfeld 8.1 die zweite Sättigungsflussdichte in der zweiten ferromagnetischen Schicht 1.2 (nicht gezeigt, siehe Fig. 15 und 16) erreicht ist. Durch diese Anordnung ist ein erstes Ausführungsbeispiel eines erfindungsgemäßen magnetischen Arbeitskreises als prinzipielles Beispiel angegeben. Außerdem ist der rotierende Permanentmagnet 2 vorhanden, der in einem definiert großen Abstand zum Magnetkreis angeordnet ist. Die Magnetfeldlinien des zweiten veränderlichen Magnetfelds 3 wirken jedoch auf einen Permeabilitätsbereich 13 des Magnetkreises ein, in dem sich das magnetische Schaltelement 1 befindet. Der gezeigte magnetischen Arbeitskreis weist über die seitlich gezeigten Bereiche des Jochs 4 einen ersten Induktionsbereich 11.1 und einen zweiten Induktionsbereich 11.2 auf. Der Permanentmagnet 8 ist in einem permanentmagnetischen Bereich 12 des Magnetkreises angeordnet.

In weiteren Ausführungen der Erfindung kann auf das Basislaminat 5 verzichtet sein und die ersten und zweiten Jochabschnitte 4.1, 4.2 sowie der magnetische Schalter 1 und der Permanentmagnet 8 durch andere technische Mittel, z. B. durch eine geeignete Haltekonstruktion, zueinander angeordnet und gehalten sein. Es ist auch möglich, dass das Basislaminat 5 eine andere Anzahl von Schichten, beispielsweise mindestens eine, aufweist.

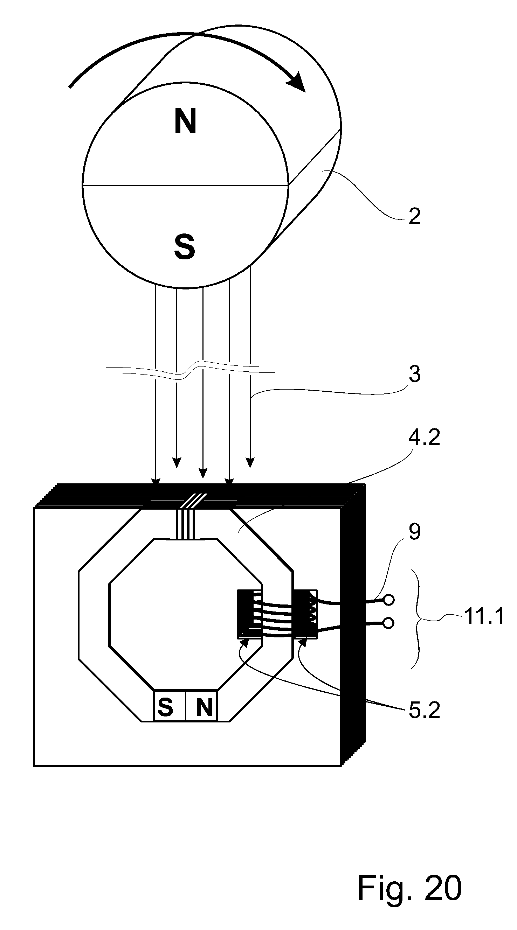

Ein zweites Ausführungsbeispiel eines erfindungsgemäßen magnetischen Arbeitskreises ist in Fig. 20 dargestellt. Zusätzlich zu den in Fig. 19 gezeigten Elementen ist eine elektrisch leitende Induktorspule als elektrisch leitendes Element 9 vorhanden. In dem Basislaminat 5 ist im Bereich der Mitte des zweiten Jochabschnitts 4.2 beidseitig je ein Durchbruch 5.2 durch das Material des Basislaminats 5 vorhanden. Das elektrisch leitende Element 9 ist durch die Durchbrüche 5.2 geführt und umgreift den zweiten Jochabschnitt 4.2 um den ersten Induktionsbereich 11.1. An dem elektrisch leitenden Element 9 sind Anschlussleitungen (nur angedeutet) zur Abführung einer in dem elektrisch leitenden Element 9 induzierten elektrischen Energie vorhanden.

In Fig. 21 ist ein drittes Ausführungsbeispiel eines erfindungsgemäßen magnetischen Arbeitskreises gezeigt. In diesem sind auch im Bereich der Mitte des ersten Jochabschnitts 4.1 Durchbrüche 5.2 vorhanden, durch die ein weiteres elektrisch leitendes Element 9 geführt ist. Über dem magnetischen Schaltelement 1 ist der rotierende Permanentmagnet 2 angeordnet, dessen zweites veränderliches Magnetfeld 3 auf den Schalter 1 einwirkt. Der rotierende Permanentmagnet 2 stellt eine Vorrichtung zur Erzeugung eines zweiten veränderlichen Magnetfelds 3 dar.

Das erfindungsgemäße Verfahren zur Bereitstellung elektrischer Energie wird vereinfacht anhand der Fig. 21 beschrieben. Durch den Permanentmagnet 8 ist ein Magnetfeld 8.1 bewirkt, das durch das Joch 4 gebündelt und gerichtet ist. Das Magnetfeld 8.1 ist statisch, d.h. es verändert sich nicht. Durch das Magnetfeld 8.1 sind in dem Joch 4 und in dem magnetischen Schalter 1 eine magnetische Flussdichte entlang von Magnetfeldlinien (siehe Fig. 15, 16 und 19) bewirkt. Die magnetische Flussdichte liegt zwar unterhalb des Wertes der zweiten Sättigungsflussdichte der zweiten ferromagnetischen Schicht 1.2 (Fig. 15 und 16), jedoch ist durch Wirkung des Magnetfelds 8.1 bereits eine gewisse Magnetisierung des Materials der zweiten ferromagnetischen Schicht 1.2 erzielt. In diesem Zustand sind die Magnetfeldlinien des durch das Joch 4, den Schalter 1 und den Permanentmagneten 8 gebildeten Magnetkreises geschlossen und es kann ein magnetischer Fluss in dem Magnetkreis entstehen. In den elektrisch leitenden Elementen 9 wird zu diesem Zeitpunkt keine elektrische Energie (elektrische Spannung) induziert. Wird der rotierende Permanentmagnet 2 in Rotation versetzt, so verändert sich während der Rotation und der damit einhergehenden Veränderung des zweiten veränderlichen Magnetfelds 3 auch die Wirkung des zweiten veränderlichen Magnetfelds 3 auf die zweite ferromagnetische Schicht 1.2. Dadurch wird der Wert der resultierenden effektiven Magnetisierung der zweiten ferromagnetischen Schicht 1.2 in Richtung des magnetischen Arbeitskreises verringert und der Magnetkreis wie oben bereits erläutert, unterbrochen. Bei einer weiteren Veränderung des zweiten veränderlichen Magnetfelds 3 aufgrund der fortschreitenden Rotation des rotierenden Permanentmagneten 2 wird der Wert der resultierenden effektiven Magnetisierung der zweiten ferromagnetischen Schicht 1.2 in Richtung des magnetischen Arbeitskreises wieder erhöht und der Magnetkreis wieder geschlossen. Bei einer weiter andauernden Rotation wiederholt sich das alternierende Öffnen und Schließen des magnetischen Arbeitskreises. Das Ein- und Ausschalten des magnetischen Schalters 1 bewirkt ein erstes veränderliches Magnetfeld 10 (lediglich angedeutet) in dem Magnetkreis, durch welches in den elektrisch leitenden Elementen 9 jeweils elektrische Spannungen induziert werden und elektrische Energie abgenommen werden kann. Durch eine entsprechend gesteuerte Rotationsgeschwindigkeit des rotierenden Permanentmagneten 2 ist die abnehmbare elektrische Energie steuerbar.

An dem ersten Induktionsbereich 11.1 ist ein elektrisch leitendes Element 9 vorhanden, über das, wie oben beschrieben, eine erzeugte elektrische Energie abgegriffen wird. An dem zweiten Induktionsbereich 11.2 ist ein weiteres elektrisch leitendes Element 9 vorhanden, wodurch die nutzbare Energie erhöht, Energie für weitere Verbraucher bereitgestellt oder der magnetische Arbeitskreis beispielsweise elektrisch oder thermisch konditioniert werden kann.

Zur Ermittlung einer geeigneten Dimensionierung des Permanentmagneten 8 im Bezug zur Stärke des zweiten veränderlichen Magnetfelds 3 des rotierenden Permanentmagneten 2 wird der Permanentmagnet 8 durch eine Spule ersetzt. Der erste Spalt 6 wird mit unterschiedlichen Materialien gefüllt (Luft, ferromagnetische Materialien mit verschiedenen Sättigungsflussdichten, antiferromagnetisches Material) und jeweils die Spule mit unterschiedlichen Wechselspannungen (bei gleicher Frequenz, z. B. 50 Hz) beaufschlagt. Die Gesamtmagnetisierung ist je nach Material und variabler Entfernung vom rotierenden Permanentmagneten 2 verschieden. Im experimentellen Fall werden nur zwei orthogonale Lagepositionen des Permanentmagneten 8 benutzt. Somit können Aussagen über die Dimensionierung sowie die zu treffende Materialwahl getroffen werden. Die Messgröße für die Magnetisierung ist die induzierte Spannung in dem oder den elektrisch leitenden Element(-en) 9. Steht am Ort des magnetischen Arbeitskreises elektrische Energie zur Verfügung, so kann der magnetische Arbeitskreis auch generell mit einem elektrisch erzeugten Magnetfeld vorgespannt werden.

Die Wahl der Materialien wird vorzugsweise so getroffen, dass der magnetische Fluss (von Permanentmagneten 8 über das Joch 4 und durch den ersten Spalt 6), durch das orthogonal dazu wirkende zweite veränderliche Magnetfeld 3 des rotierenden Permanentmagneten 2 unterbrochen wird. Steht das zweite veränderliche Magnetfeld 3 des rotierenden Permanentmagneten 2 parallel, dann wird das Magnetfeld 8.1 im magnetischen Schalter 1 verstärkt. Das Material im ersten Spalt 6 stellt in der verwendeten Form einen anisotrop magnetisierbaren Körper dar.

Bezugszeichen

| | |
|---|---|
| 1 | magnetisches Schaltelement |
| 1.1 | erste ferromagnetische Schicht |
| 1.2 | zweite ferromagnetische Schicht |
| 1.3 | antiferromagnetische Schicht |
| 2 | rotierender Permanentmagnet |
| 3 | zweites veränderliches Magnetfeld |
| 4 | Joch |
| 4.1 | erster Jochabschnitt |
| 4.2 | zweiter Jochabschnitt |
| 4.3 | Stirnfläche |
| 5 | Basislaminat |
| 5.1 | Ausnehmung |
| 5.2 | Durchbruch |
| 6 | erster Spalt |
| 7 | zweiter Spalt |
| 8 | Permanentmagnet |
| 8.1 | Magnetfeld |
| 9 | elektrisch leitendes Element |
| 10 | erstes veränderliches Magnetfeld |
| 11.1 | erster Induktionsbereich |
| 11.2 | zweiter Induktionsbereich |
| 12 | permanentmagnetischer Bereich |
| 13 | Permeabilitätsbereich |

**Patentansprüche**

1. Magnetischer Arbeitskreis mit einem Magnetkreis und einer außerhalb des Magnetkreises angeordneten Vorrichtung zur Erzeugung eines auf einen Permeabilitätsbereich (13) des Magnetkreises einwirkenden veränderlichen äußeren Magnetfelds (3) zur gezielten und berührungslosen Veränderung einer resultierenden effektiven magnetischen Permeabilität in einem Permeabilitätsbereich (13) des Magnetkreises und zur topischen Bereitstellung von Energie, wobei der Magnetkreis

einen permanentmagnetischen Bereich (12) mit einem permanentmagnetischen Material aufweist, durch das ein Magnetfeld (8.1) in dem Magnetkreis bereitgestellt ist;

den Permeabilitätsbereich (13) aufweist, wobei in dem Permeabilitätsbereich (13) ein magnetisches Schaltelement (1) vorhanden ist und in dem magnetischen Schaltelement (1) mindestens ein Material vorhanden ist, dessen magnetische Permeabilität durch Wirkung des veränderlichen äußeren Magnetfelds (3) veränderbar ist; und mindestens einen Induktionsbereich (11, 11.1, 11.2) aufweist, in denen durch Wirkung einer Änderung der resultierenden effektiven Permeabilität im Permeabilitätsbereich (13) des Magnetkreises und der bereitgestellten Energie eine magnetische Flussänderung auftritt.

2. Magnetischer Arbeitskreis nach Anspruch 1, **dadurch gekennzeichnet, dass** das magnetische Schaltelement (1) aus einer Schichtenfolge aus übereinander oder nebeneinander aufgestapelter Schichten besteht, wobei auf mindestens eine erste ferromagnetisch harte Schicht (1.1) mit einer ersten Sättigungsflussdichte, mindestens eine entweder antiferromagnetische oder ferromagnetisch weiche Schicht (1.2) und mindestens eine dritte ferromagnetisch harte Schicht (1.3) mit einer dritten Sättigungsflussdichte abfolgt.

3. Magnetischer Arbeitskreis nach Anspruch 2, **dadurch gekennzeichnet, dass** die erste und dritte Sättigungsflussdichte Werte in einem Bereich von 400 bis 600 mT aufweisen.

4. Magnetischer Arbeitskreis nach Anspruch 2, **dadurch gekennzeichnet, dass** die antiferromagnetische oder ferromagnetisch weiche Schicht (1.2) eine zweite Sättigungsflussdichte aufweist und die zweite Sättigungsflussdichte Werte von 500 bis 1000 mT aufweist.

5. Magnetischer Arbeitskreis nach einem der Ansprüche 1 bis 4, **dadurch gekennzeichnet, dass** der Magnetkreis ein durch einen ersten Spalt (6) in dem Permeabilitätsbereich (13) und durch einen zweiten Spalt (7) in dem permanentmagnetischen Bereich (12) in Jochabschnitte (4.1, 4.2) geteiltes Joch (4) aufweist, wobei der erste Spalt (6) und der zweite Spalt (7) jeweils durch Stirnflächen (4.3) der Jochabschnitte (4.1, 4.2) begrenzt sind und

   - in dem ersten Spalt (6) das magnetische Schaltelement (1) angeordnet ist und die Schichten (1.1 bis 1.3) des magnetischen Schaltelements (1) sich parallel zu den, den ersten Spalt (6) begrenzenden, Stirnflächen (4.3) der Jochabschnitte (4.1, 4.2) erstreckend angeordnet sind und
   - in dem zweiten Spalt (7) ein Permanentmagnet (8) angeordnet ist.

6. Magnetischer Arbeitskreis nach einem der Ansprüche 1 bis 3, **dadurch gekennzeichnet, dass** das durch den Permanentmagneten (8) bewirkte und durch das Joch (4) gebündelte Magnetfeld (8.1) keine der ersten bis dritten Sättigungsflussdichten in den ersten bis dritten ferromagnetischen Schichten (1.1, 1.2, 1.3) des magnetischen Schaltelements (1) verursacht ist.

7. Magnetischer Arbeitskreis nach einem der Ansprüche 1 bis 6, **dadurch gekennzeichnet, dass** mindestens einem der Induktionsbereiche (11, 11.1, 11.2) ein elektrisch leitendes Element (9) zugeordnet ist und durch Wirkung von magnetischen Flussänderungen in den Induktionsbreichen (11, 11.1, 11.2) eine elektrische Spannung in dem mindestens einem elektrisch leitenden Element (9) als erzeugte Energie abgreifbar ist.

8. Magnetischer Arbeitskreis nach einem der Ansprüche 5 bis 7, **dadurch gekennzeichnet, dass** der magnetische Arbeitskreis unter Nutzung der LTCC-Technologie (Low Temperature Cofired Ceramic) hergestellt ist.

9. Verfahren zur Erzeugung von Energie durch eine gezielte Veränderung einer resultierenden effektiven magnetischen Permeabilität eines Magnetkreises oder einer magnetisch wirksamen Anordnung in denen durch ein permanentmagnetisches Material eines permanentmagnetischen Bereichs (12) ein Magnetfeld (8.1) bewirkt ist, indem berührungslos durch Wirkung eines veränderlichen externen Magnetfelds (3) dem Magnetkreis eine bereitgestellte Energie topisch zugeführt und eine magnetische Permeabilität eines Materials des Magnetkreises in einem Permeabilitätsbereich (13) verändert wird und an mindestens einem Induktionsbereich (11, 11.1, 11.2) des Magnetkreises eine erzeugte Energie abgenommen wird.

10. Verfahren nach Anspruch 9, **dadurch gekennzeichnet, dass** die erzeugte Energie als elektrische Energie abgenommen wird.

**11.** Verfahren nach Anspruch 9 oder 10, **dadurch gekennzeichnet, dass** die erzeugte Energie durch einen auftretenden magnetokalorischen Effekt erzeugt und thermodynamisch genutzt wird.

**Claims**

**1.** Magnetic working circuit having a magnetic circuit and a device arranged outside of the magnetic circuit for generating a changing external magnetic field (3), acting on a permeability region (13) of the magnetic circuit, for a targeted and contactless change in a resultant effective magnetic permeability in a permeability region (13) of the magnetic circuit and for topical provision of energy,
wherein the magnetic circuit
has a permanent magnetic region (12) with a permanent magnetic material, by which a magnetic field (8.1) is provided in the magnetic circuit;
has the permeability region (13), wherein a magnetic switching element (1) is present in the permeability region (13) and at least one material, the magnetic permeability of which is changeable by the effect of the changing external magnetic field (3), is present in the magnetic switching element (1); and
has at least one induction region (11, 11.1, 11.2), in which there is a magnetic flux change as a result of the effect of a change in the resultant effective permeability in the permeability region (13) of the magnetic circuit and in the provided energy.

**2.** Magnetic working circuit according to claim 1, **characterized in that** the magnetic switching element (1) consists of a sequence of layers stacked above one another or next to one another, wherein at least one first ferromagnetically hard layer (1.1) with a first saturation flux density is followed by at least one either anti-ferromagnetic or ferromagnetically soft layer (1.2) and at least one third ferromagnetically hard layer (1.3) with a third saturation flux density.

**3.** Magnetic working circuit according to claim 2, **characterized in that** the first and third saturation flux density have values in a range from 400 to 600 mT.

**4.** Magnetic working circuit according to claim 2, **characterized in that** the anti-ferromagnetic or ferromagnetically soft layer (1.2) has a second saturation flux density and the second saturation flux density has values from 500 to 1000 mT.

**5.** Magnetic working circuit according to one of claims 1 to 4, **characterized in that** the magnetic circuit has a yoke (4) split by a first gap (6) in the permeability region (13) and by a second gap (7) in the permanent magnetic region (12) into yoke portions (4.1, 4.2), wherein the first gap (6) and the second gap (7) are respectively delimited by end faces (4.3) of the yoke portions (4.1, 4.2) and

- the magnetic switching element (1) is arranged in the first gap (6) and the layers (1.1 to 1.3) of the magnetic switching element (1) are arranged extending parallel to the end faces (4.3) of the yoke portions (4.1, 4.2) delimiting the first gap (6) and
- a permanent magnet (8) is arranged in the second gap (7).

**6.** Magnetic working circuit according to one of claims 1 to 3, **characterized in that** the magnetic field (8.1) caused by the permanent magnet (8) and focused by the yoke (4) does not cause any of the first to third saturation flux densities in the first to third ferromagnetic layers (1.1, 1.2, 1.3) of the magnetic switching element (1).

**7.** Magnetic working circuit according to one of claims 1 to 6, **characterized in that** an electrically conductive element (9) is associated with at least one of the induction regions (11, 11.1, 11.2) and an electric voltage can be tapped in the at least one electrically conductive element (9) as generated energy as a result of the effect of magnetic flux changes in the induction regions (11, 11.1, 11.2).

**8.** Magnetic working circuit according to one of claims 5 to 7, **characterized in that** the magnetic working circuit is generated using LTCC (low-temperature cofired ceramic) technology.

**9.** Method for producing energy by a targeted change in a resultant effective magnetic permeability of a magnetic circuit or in a magnetically effective arrangement, in which a magnetic field (8.1) is caused by a permanent magnetic material of a permanent magnetic region (12), by virtue of provided energy being supplied topically in a contactless manner to the magnetic circuit by the effect of a changing external magnetic field (3) and a magnetic permeability of a material of the magnetic circuit being changed in a permeability region (13) and generated energy being tapped at at least one induction region (11, 11.1, 11.2) of the magnetic circuit.

10. Method according to claim 9, **characterized in that** the generated energy is tapped as electrical energy.

11. Method according to claim 9 or 10, **characterized in that** the produced energy is generated by an occurring magnetocaloric effect and used thermodynamically.

**Revendications**

1. Circuit de travail magnétique ayant un circuit magnétique et un dispositif disposé à l'extérieur du circuit magnétique pour générer un champ magnétique externe changeant (3), influençant une région de perméabilité (13) du circuit magnétique, pour changer de manière ciblée et sans contact une perméabilité magnétique effective résultante dans une région de perméabilité (13) du circuit magnétique et pour la fourniture topique d'énergie,

   le circuit magnétique

   ayant une région magnétique permanente (12) avec un matériau magnétique permanent, un champ magnétique (8.1) étant fourni dans le circuit magnétique par le matériau magnétique permanent;

   ayant la région de perméabilité (13), un élément de commutation magnétique (1) étant présent dans la région de perméabilité (13) et au moins un matériau, dont la perméabilité magnétique peut être changée par l'effet du champ magnétique externe changeant (3), étant présent dans l'élément de commutation magnétique (1); et ayant au moins une région d'induction (11, 11.1, 11.2), dans lequel il y a un changement de flux magnétique résultant de l'effet d'un changement de la perméabilité effective résultante dans la région de perméabilité (13) du circuit magnétique et de l'énergie fournie.

2. Circuit de travail magnétique selon la revendication 1, **caractérisé en ce que** l'élément de commutation magnétique (1) consiste en une succession de couches empilées les unes sur les autres ou les unes à côté des autres, au moins une première couche ferromagnétiquement dure (1.1) avec une première densité de flux de saturation étant suivie d'au moins une couche soit anti-ferromagnétique ou ferromagnétiquement douce (1.2) et au moins une troisième couche ferromagnétiquement dure (1.3) avec une troisième densité de flux de saturation.

3. Circuit de travail magnétique selon la revendication 2, **caractérisé en ce que** la première et troisième densité de flux de saturation ont des valeurs dans une plage de 400 à 600 mT.

4. Circuit de travail magnétique selon la revendication 2, **caractérisé en ce que** la couche anti-ferromagnétique ou ferromagnétiquement douce (1.2) a une deuxième densité de flux de saturation et la deuxième densité de flux de saturation a des valeurs de 500 à 1000 mT.

5. Circuit de travail magnétique selon une des revendications 1 à 4, **caractérisé en ce que** le circuit magnétique a une culasse (4) divisée en sections de culasse (4.1, 4.2) par une première fente (6) dans la région de perméabilité (13) et par une deuxième fente (7) dans la région magnétique permanente (12), la première fente (6) et la deuxième fente (7) étant délimitées respectivement par des faces d'extrémité (4.3) des sections de culasse (4.1, 4.2) et

   - l'élément de commutation magnétique (1) étant disposé dans la première fente (6) et les couches (1.1 à 1.3) de l'élément de commutation magnétique (1) étant disposées s'étendant parallèlement aux faces d'extrémité (4.3) des sections de culasse (4.1, 4.2) délimitant la première fente (6) et
   - un aimant permanent (8) étant disposé dans la deuxième fente (7).

6. Circuit de travail magnétique selon une des revendications 1 à 3, **caractérisé en ce que** le champ magnétique (8.1) provoqué par l'aimant permanent (8) et concentré par la culasse (4) ne cause pas aucune des premières à troisièmes densités de flux de saturation dans les premières à troisièmes couches ferromagnétiques (1.1, 1.2, 1.3) de l'élément de commutation magnétique (1).

7. Circuit de travail magnétique selon une des revendications 1 à 6, **caractérisé en ce qu'**un élément électriquement conducteur (9) est associé à au moins une des régions d'induction (11, 11.1, 11.2) et une tension électrique peut être prélevée dans l'au moins un élément électriquement conducteur (9) en tant qu'énergie générée résultant de l'effet de changements de flux magnétique dans les régions d'induction (11, 11.1, 11.2).

8. Circuit de travail magnétique selon une des revendications 5 à 7, **caractérisé en ce que** le circuit de travail magnétique est généré en utilisant la technologie LTCC (low-temperature cofired ceramic - céramique co-cuite à basse température).

9. Procédé de production d'énergie par un changement ciblé d'une perméabilité magnétique effective résultante d'un circuit magnétique ou d'un dispositif magnétiquement effectif, dans lesquels un champ magnétique (8.1) est provoqué par un matériau magnétique permanent d'une région magnétique permanente (12), en délivrant topiquement de l'énergie fournie d'une manière sans contact au circuit magnétique par l'effet d'un champ magnétique externe changeant (3) et en changeant une perméabilité magnétique d'un matériau du circuit magnétique dans une région de perméabilité (13) et en prélevant de l'énergie générée à au moins une région d'induction (11, 11.1, 11.2) du circuit magnétique.

10. Procédé selon la revendication 9, **caractérisé en ce que** l'énergie générée est prélevée en tant qu'énergie électrique.

11. Procédé selon la revendication 9 ou 10, **caractérisé en ce que** l'énergie générée est produite par un effet magnétocalorique se produisant et utilisée thermodynamiquement.

Fig. 1

Fig. 2

Integrationsweg

Fig. 3

1/2 $I_e$

Luftspalt

$I_m$

$I_s$

1/2 $I_e$    ferromagnetisch

Fig. 4

Fig. 5

Fig. 6

Fig. 7

Fig. 8

Fig. 9

Fig. 10

Fig. 11

Fig. 12

Fig. 13

Fig. 14

EP 2 976 830 B1

Fig. 15

EP 2 976 830 B1

Fig. 16

Fig. 17

5.1          5

Fig. 18

Fig. 19

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3732312 A1
- DE 3800098 A1
- DE 102007052784 A1
- EP 0308611 A1

**In der Beschreibung aufgeführte Nicht-Patentliteratur**

- **STÖCKER, H.** Taschenbuch der Physik. 2000
- **FÄHLER et al.** *Advanced Engineering Materials,* 2012, vol. 14, 10-19